(19) Europäisches Patentamt / European Patent Office / Office européen des brevets

(11) **EP 3 860 122 B1**

(12) **EUROPEAN PATENT SPECIFICATION**

(45) Date of publication and mention
of the grant of the patent:
**27.03.2024   Bulletin 2024/13**

(21) Application number: **19864950.1**

(22) Date of filing: **13.09.2019**

(51) International Patent Classification (IPC):
**H04N 19/105** *(2014.01)*   **H04N 19/11** *(2014.01)*
**H04N 19/134** *(2014.01)*   **H04N 19/176** *(2014.01)*
**H04N 19/196** *(2014.01)*   **H04N 19/70** *(2014.01)*
**H04N 19/593** *(2014.01)*

(52) Cooperative Patent Classification (CPC):
**H04N 19/593; H04N 19/105; H04N 19/11;**
**H04N 19/176; H04N 19/196; H04N 19/70**

(86) International application number:
**PCT/JP2019/036141**

(87) International publication number:
**WO 2020/066702 (02.04.2020 Gazette 2020/14)**

(54) **IMAGE DECODING DEVICE, IMAGE DECODING METHOD, AND IMAGE DECODING PROGRAM**

BILDDECODIERUNGSVORRICHTUNG, BILDDECODIERUNGSVERFAHREN UND
BILDDECODIERUNGSPROGRAMM

DISPOSITIF, PROCÉDÉ ET PROGRAMME DE DÉCODAGE D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2018   JP 2018183954**

(43) Date of publication of application:
**04.08.2021   Bulletin 2021/31**

(73) Proprietor: **JVCKenwood Corporation
Yokohama-shi, Kanagawa 2210022 (JP)**

(72) Inventor: **TAKEHARA, Hideki
Yokohama-shi Kanagawa 221-0022 (JP)**

(74) Representative: **Emde, Eric
Wagner & Geyer Partnerschaft mbB
Patent- und Rechtsanwälte
Gewürzmühlstrasse 5
80538 München (DE)**

(56) References cited:
**WO-A1-2018/066863    JP-A- 2013 141 075
JP-A- 2017 200 231    US-A1- 2011 249 741
US-A1- 2018 098 064**

• **VAN DER AUWERA (QUALCOMM) G ET AL:
"Description of Core Experiment 3 (CE3): Intra
Prediction and Mode Coding", 122. MPEG
MEETING; 20180416 - 20180420; SAN DIEGO;
(MOTION PICTURE EXPERT GROUP OR ISO/IEC
JTC1/SC29/WG11), , no. m42829 21 June 2018
(2018-06-21), XP030262217, Retrieved from the
Internet:
URL:http://phenix.int-evry.fr/mpeg/doc_end
_user/documents/122_San%20Diego/wg11/m42
82 9-JVET-J1023-v3-JVET-J1023r2.zip
JVET-J1023r2_with_markups.docx [retrieved on
2018-06-21]**
• **Francois Edouard , Pautet Stephane: "Non-CE6c:
Adaptations of intra mode coding", 8. JCT-VC
meeting; 20120201 - 20120210; San Jose; (Joint
Collaborative Team on Video Coding of ISO/IEC
JTC1/SC29/WG11 and ITU-T SG.16 ), no.
JCTVC-H0175-r2, 1 February 2012 (2012-02-01),
pages 1-12, XP030231711, San Jose , CA , USA**

**Description**

[TECHNICAL FIELD]

The present invention relates to a technology of coding and decoding a picture by using intra prediction.

[BACKGROUND ART]

Picture coding technologies such as HEVC (H.265) are available. In HEVC, intra prediction coding (intra picture prediction coding) is used in addition to inter prediction coding (inter picture prediction coding). Attention is drawn to document US 2018/098064 A1 which relates to a video coder determining a first block of the video data is intra mode coded; based on a first height and the first width of the first block, identifies a group of N available intra prediction modes for the first block of video data; selects from the group of N available intra prediction modes, a first intra prediction mode used to code the first block of the video data; and codes the first block using the first intra prediction mode. A video coder generates a first most probable mode (MPM) candidate list for the block; codes a first flag indicating an actual intra prediction mode used to code the block is not included in the first MPM candidate list; generates a second MPM candidate list by deriving at least one candidate intra prediction mode based on an intra prediction mode in the first MPM candidate list. Further attention is drawn to document WO 2018/066863 A1 which relates a method and an apparatus for encoding/decoding an image. The method for decoding an image comprises the steps of: decoding first information indicating whether a maximum of N intra-prediction modes or a maximum of M intra-prediction modes are used for intra-prediction of a current block, wherein M is smaller than N; deriving an intra-prediction mode for the current block; when the decoded first information indicates that the maximum of N intra-prediction modes are used for intra-prediction of the current block, demapping the derived intra-prediction mode to a corresponding intra-prediction mode among the maximum of N intra-prediction modes; and generating an intra-prediction block by performing intra-prediction of the current block on the basis of the demapped intra-prediction mode. Finally, attention is drawn to document VAN DER AUWERA (QUALCOMM) G ET AL: "Description of Core Experiment 3 (CE3): Intra Prediction and Mode Coding", 122. MPEG MEETING; 20180416 - 20180420; SAN DIEGO; (MOTION PICTURE EXPERT GROUP OR ISO/IEC JTC1/SC29/WG11 ), no. m42829 21 June 2018 (2018-06-21 ).

[Patent Literature 1] JP2016-213853

[SUMMARY OF INVENTION]

[TECHNICAL PROBLEM]

In HEVC, a maximum block size of 32 pixels by 32 pixels in a square block resulting from quadtree partitioning is subject to intra prediction. In high-definition pictures (e.g., 4K pictures and 8K pictures) and 360° pictures, high-efficient intra prediction in a larger block size is provided.

The present invention addresses this issue, and a purpose thereof is to provide a technology of improving the coding efficiency in intra prediction.

[SOLUTION TO PROBLEM]

The invention is defined by the appended independent claims.

[ADVANTAGEOUS EFFECTS OF INVENTION]

According to the embodiment, the coding efficiency in intra prediction is improved.

[BRIEF DESCRIPTION OF DRAWINGS]

Fig. 1 is a diagram that explains intra prediction modes in HEVC;
Fig. 2 is a diagraph that explains a syntax related to the intra prediction mode of HEVC;
Fig. 3 is a diagram that explains a picture coding device and a picture decoding device according to embodiment 1 of the present invention;
Fig. 4 shows an example in which a partial area in a picture input to the picture coding device is partitioned into blocks based on the block size determined by the block size determination unit;

Fig. 5 shows a configuration of the intra prediction selection unit of embodiment 1;

Fig. 6 is a flowchart for explaining the operation of the intra prediction selection unit of embodiment 1;

Fig. 7 is a diagram that explains derivation of a prediction value;

Fig. 8 is a diagram that explains blocks neighboring the block subject to prediction;

Fig. 9 is a flowchart for explaining the operation of the process of generating a prediction mode candidate list 0;

Fig. 10 shows a table showing the predetermined priority order of prediction modes used in the process of generating the prediction mode candidate list 0;

Fig. 11 is a flowchart for explaining the operation of the process of generating a prediction mode candidate list 1;

Fig. 12 shows a table showing the predetermined priority order of prediction modes used in the process of generating the prediction mode candidate list 1;

Fig. 13 is a diagram that explains a syntax related to the intra prediction mode of embodiment 1;

Fig. 14 is a diagram that explains a syntax related to the intra prediction mode of variation 4 of embodiment 1;

Fig. 15 shows a configuration of the intra prediction selection unit according to embodiment 2;

Fig. 16 is a flowchart for explaining the operation of the intra prediction selection unit of embodiment 2;

Fig. 17 is a diagram that explains a syntax related to the intra prediction mode of embodiment 2;

Fig. 18 is a table showing the relationship between intra_luma_merge_idx and the neighboring block;

Fig. 19 is a diagram that explains a syntax related to the intra prediction mode according to variation 2 of embodiment 2; and

Fig. 20 is a diagram that explains another syntax related to the intra prediction mode of variation 2 of embodiment 2.

[DESCRIPTION OF EMBODIMENTS]

A description will first be given of intra prediction in HEVC.

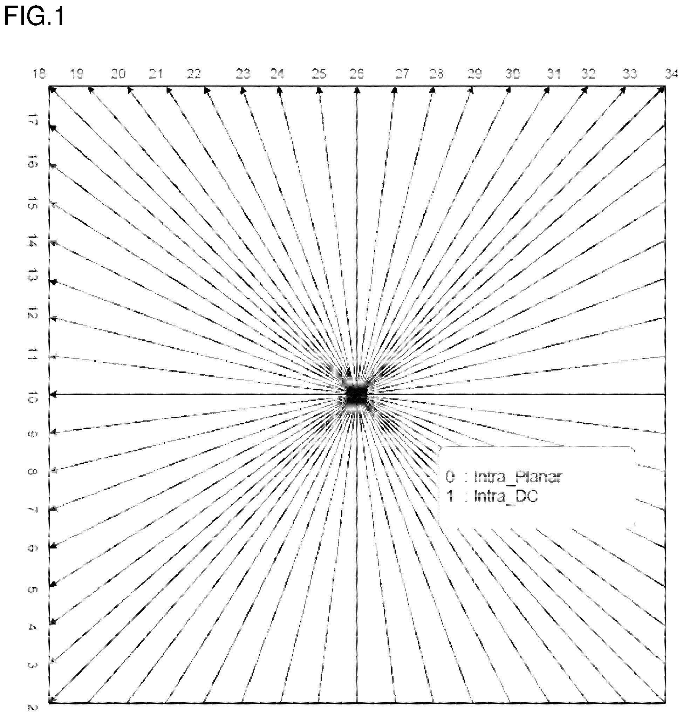

Fig. 1 is a diagram that explains intra prediction modes in HEVC. As shown in Fig. 1, a total of 35 modes from a prediction mode 0 to a prediction mode 34 are defined as intra prediction modes in HEVC. The prediction mode 0 is INTRA_PLANAR, in which four reference pixels generated by filtering pixels neighboring a block subject to prediction are subject to interpolative prediction to calculate prediction values. The prediction mode 1 is INTRA_DC, in which a set of horizontally neighboring pixels twice the prediction block width of the block subject to prediction are averaged and a set of vertically neighboring pixels twice the prediction block height are averaged to calculate prediction values. In the prediction modes 2 through 34, prediction values are calculated from reference pixels generated by filtering pixels neighboring the block subject to prediction in accordance with the respective angles. The larger the size of the block being predicted, the more heavily the pixels neighboring the block subject to prediction are filtered, and the smaller the size, the less heavily. For filtering, a 3-tap filter of 1:2:1 is used.

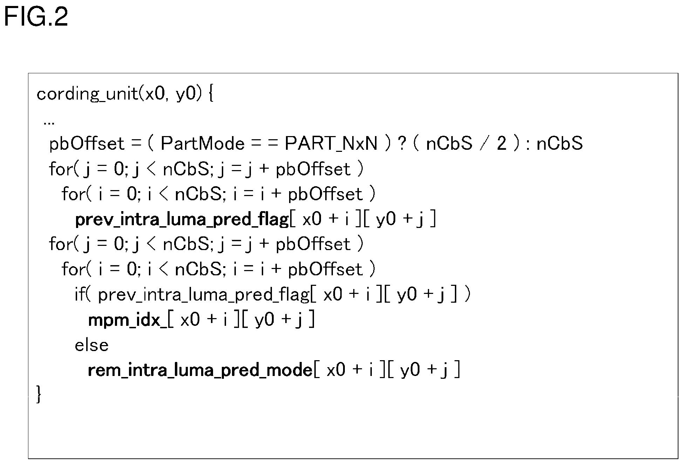

Fig. 2 is a diagram that explains a syntax related to the intra prediction mode of HEVC. prev_intra_luma_pred_flag is a flag indicating whether to use an intra prediction mode candidate derived for each block subject to prediction. When prev_intra_luma_pred_flag is 1, the intra prediction mode candidate is used. When prev_intra_luma_pred_flag is 0, the intra prediction mode candidate is not used. When prev_intra_luma_pred_flag is 1, mpm_idx (mpm index) indicates the number for the intra prediction mode candidate, and the intra prediction mode candidate indicated by mpm_idx will be the intra prediction mode of the block subject to prediction. 3 intra prediction mode candidates from the total of 35 intra prediction modes are generated for each block subject to prediction, based on the intra prediction mode of the neighboring block, and mpm_idx will be set to 0, 1, or 2. When prev_intra_luma_pred_flag is 0, the number for the intra prediction mode is derived from rem_intra_luma_pred_mode. rem_intra_luma_pred_mode indicates the intra prediction mode other than the intra prediction mode candidates. In other words, rem_intra_luma_pred_mode indicates one of the 32 intra prediction modes resulting from excluding the intra prediction mode candidates from the total of 35 intra prediction modes. The intra prediction mode indicated by rem_intra_luma_pred_mode will be the intra prediction mode of the block subject to prediction. As described above, in HEVC, each of the total of 35 intra prediction modes can possibly be coded (decoded) in mpm_idx or rem_intra_luma_pred_mode. prev_intra_luma_pred_flag, mpm_idx, and rem_intra_luma_pred_mode are subject to binary arithmetic coding by fixed-length binarization, truncated rice binarization, and fixed-length binarization, respectively. rem_intra_luma_pred_mode is subject to binary arithmetic coding by 5-bit fixed-length binarization. The smaller the value, the higher the coding efficiency of truncated rice binarization.

As described above, the prediction value from intra prediction is calculated based on one angle in the prediction modes 2 through 34 of HEVC. The code volume is reduced by predicting an edge direction included in a picture that give rise to an increase in the code volume and identifying a difference. If the size of the block subject to prediction is large and if the prediction is made at one angle, the edge direction may be deviated within the block, and the prediction efficiency may not be sufficiently favorable. For this reason, the pixels neighboring the block subject to prediction are filtered.

The maximum size of a block subject to prediction in HEVC is 32 pixels×32 pixels (hereinafter, denoted as 32×32). In 4K pictures and 8K pictures, on the other hand, it is known that the prediction efficiency is improved by using a large size of a block subject to prediction. It is important to increase the size of a block subject to prediction for the purpose of improving the prediction efficiency.

This is addressed in the following embodiments by providing intra prediction suitable when the maximum size of a block subject to prediction is larger. Of the plurality of intra prediction modes, intra prediction modes in which the neighboring pixel used for prediction does not have angular dependency will be referred to as non-angular intra prediction modes hereinafter, and intra prediction modes in which the neighboring pixel used for prediction have angular dependency will be referred to angular intra prediction modes. Angular intra prediction modes include intra prediction modes in the horizontal direction and intra prediction modes in the vertical direction.

In HEVC, the prediction mode 0 and the prediction mode 1 are non-angular intra prediction modes, and the prediction modes 2 through 34 are angular intra prediction modes. To be more specific, the prediction modes 2 through 17 are intra prediction modes in the horizontal direction, and the prediction modes 18 through 34 are intra prediction modes in the vertical direction.


(Embodiment 1)

A description will now be given of the details of a picture coding device, a picture coding method, a picture coding program, a picture decoding device, a picture decoding method, and a picture decoding program according to the embodiment with reference to the drawings.

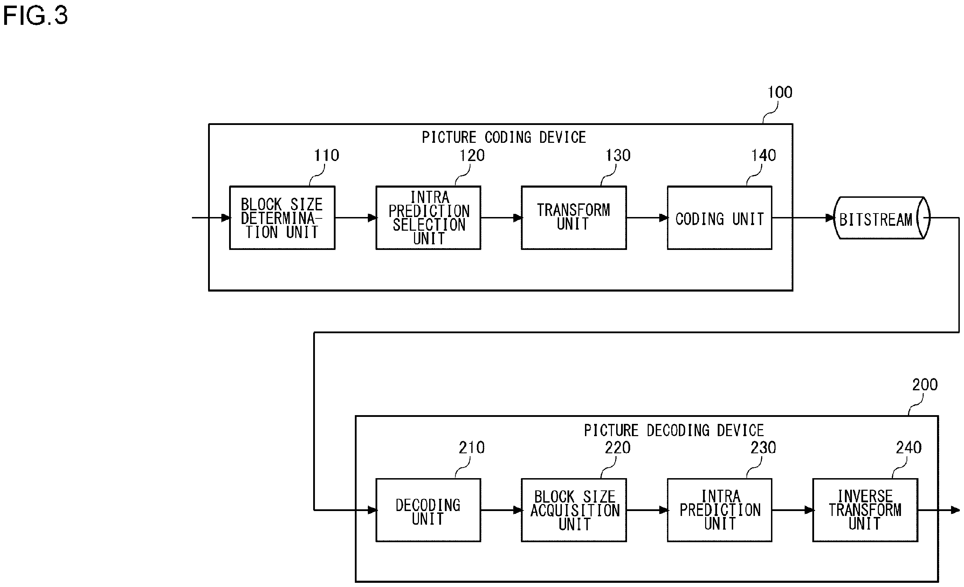

Fig. 3 is a diagram that explains a picture coding device 100 and a picture decoding device 200 according to embodiment 1 of the present invention. The picture coding device 100 according to embodiment 1 includes a block size determination unit 110, an intra prediction selection unit 120, a transform unit 130, and a coding unit 140. The picture coding device 100 receives an input picture and outputs a bitstream.

The picture decoding device 200 includes a decoding unit 210, a block size acquisition unit 220, an intra prediction unit 230, and an inverse transform unit 240. The picture decoding device 200 receives a bitstream and outputs a decoded picture.

The intra prediction unit 230 of embodiment 1 uses the same intra prediction modes as used in HEVC. The picture coding device 100 and the picture decoding device 200 are implemented by hardware such as an information processing device provided with a central processing unit (CPU), a frame memory, a hard disk, etc.

A description will first be given of the function and operation of the parts of the picture coding device 100. The picture coding device 100 receives an input picture.

The block size determination unit 110 determines a block size subject to intra prediction coding, based on the input picture. The block size determination unit 110 supplies the determined block size and input pixels (input values) corresponding to the block size to the intra prediction selection unit 120. The method for determining a block size will not be described in detail here. Rate distortion optimization (RDO) for selecting an optimum block size by comparing evaluation scores of a plurality of block sizes or pre-decision based on evaluation scores, as used in HEVC reference software, may be performed.

A description will be given of a block size.

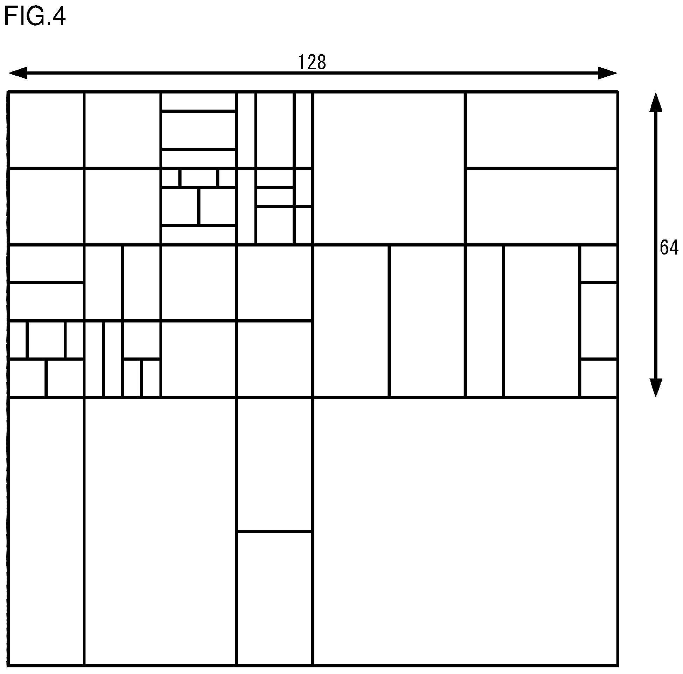

Fig. 4 shows an example in which a partial area in a picture input to the picture coding device 100 is partitioned into blocks based on the block size determined by the block size determination unit 110. Block sizes of 4×4, 8×4, 4×8, 8×8, 16×8, 8×16, 32×32, ..., 128×64, 64×128, and 128×128 are available. The input picture is partitioned by using these block sizes such that the blocks do not overlap.

The intra prediction selection unit 120 selects one intra prediction mode from the plurality of intra prediction modes, based on the block size, the input pixels, and the coded picture. The intra prediction selection unit 120 derives prediction values from coded pixels, based on the selected intra prediction mode. The intra prediction selection unit 120 supplies the block size, the selected intra prediction mode, the input values, and the prediction values to the transform unit 130. The coded pixels are shared by the parts in the picture coding device 100 and are not shown here. The detail of the intra prediction selection unit 120 will be described later.

The transform unit 130 derives a difference value by subtracting the prediction value from the input value, derives prediction error data by subjecting the difference value to orthogonal transform, quantization, etc., and supplies the block size, the intra prediction mode, and the derived prediction error data to the coding unit 140.

The coding unit 140 encodes the header and other information as necessary, codes a bitstream related to the block size supplied from the transform unit 130, codes the intra prediction mode in a bitstream, codes the prediction error data, and outputs a bitstream. The detail of the process for coding the intra prediction mode will be described later.

The picture coding device 100 repeats the above steps until all areas in the input picture are coded.

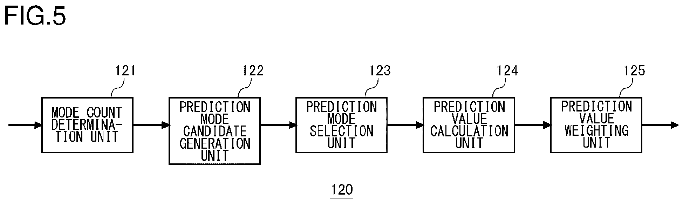

A description will now be given of the detail of the intra prediction selection unit 120. Fig. 5 shows a configuration of the intra prediction selection unit 120 of embodiment 1. The intra prediction selection unit 120 includes a mode count determination unit 121, a prediction mode candidate generation unit 122, a prediction mode selection unit 123, a prediction value calculation unit 124, and a prediction value weighting unit 125.

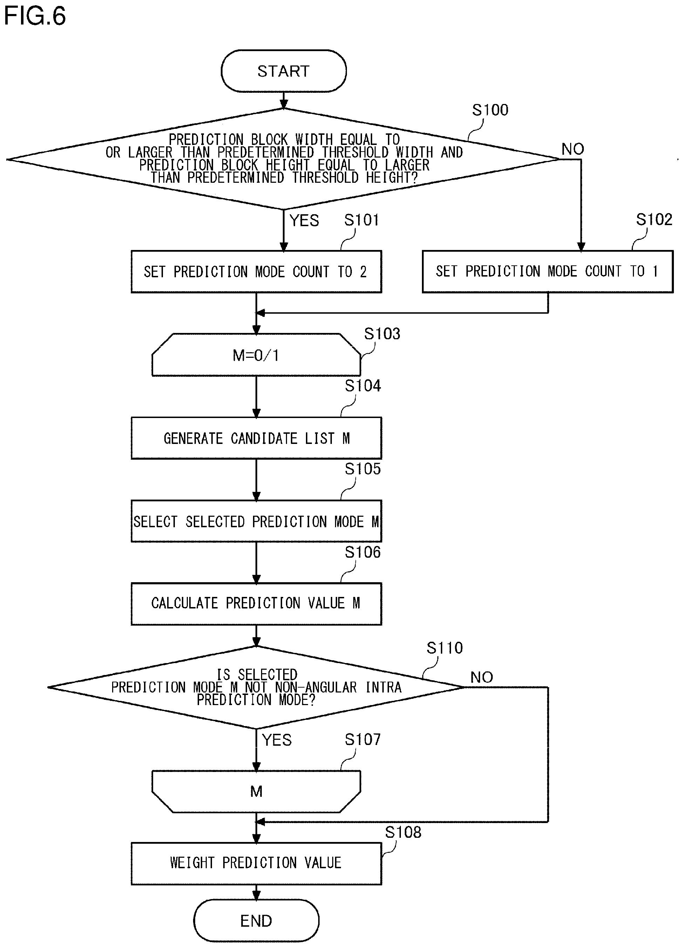

Fig. 6 is a flowchart for explaining the operation of the intra prediction selection unit 120 of embodiment 1. Hereafter, the detail of the intra prediction selection unit 120 will be explained with reference to Fig. 5 and Fig. 6. First, the mode count determination unit 121 examines whether the prediction block width is equal to or larger than a predetermined threshold width and the prediction block height is equal to larger than a predetermined threshold height (S100). It will be defined here that the predetermined threshold width and the predetermined threshold height are 32, respectively. Alternatively, the the predetermined threshold width and the predetermined threshold height may have different values. For example, the predetermined threshold width may be 64 and the predetermined threshold height may be 32. The predetermined threshold width and the predetermined threshold height may be coded in a sequence_parameter_set (SPS) syntax as an extended Golomb code string and stored in the header.

Next, when the prediction block width is equal to or larger than the predetermined threshold width and the prediction block height is equal to or larger than the predetermined threshold height (YES in S100), the mode count determination unit 121 sets the prediction mode count (the number of prediction modes) to 2 (S101). When it is not found that the prediction block width is equal to or larger than the predetermined threshold width and the prediction block height is equal to or larger than the predetermined threshold height (NO in S100), the mode count determination unit 121 sets the prediction mode count to 1 (S102).

The intra prediction selection unit 120 then repeats S103 through S107 by setting M to 0 when the prediction mode count is 1 or by setting M to 0 and 1 when the prediction mode count is 2. Although it is assumed here that M is set only to 0 to perform the steps when the prediction mode count is 1 in consideration of reduction in the number of steps. Alternatively, S103 through S107 may be repeated by setting M to 0 and 1 even when the prediction mode count is 1 in consideration of simplification of the circuit configuration.

The prediction mode candidate generation unit 122 generates a prediction mode candidate list M from the coded neighboring blocks located around the block subject to prediction (S104) and supplies the prediction mode candidate list M thus generated to the prediction mode selection unit 123. The detail of the process of generating a prediction mode candidate list will be described later.

The prediction mode selection unit 123 calculates evaluation scores of the prediction modes 0 through 34. The prediction mode selection unit 123 selects one selected prediction mode M from the prediction modes 0 through 34 based on the calculated evaluation scores (S105). The prediction mode selection unit 123 supplies the selected prediction mode M to the prediction value calculation unit 124. It is defined here that one of the prediction modes 0 through 34 is selected as the selected prediction mode M by RDO decision.

The prediction value calculation unit 124 calculates a prediction value M of the block subject to prediction, based on the selected prediction mode M input from the prediction mode selection unit 123 (S106) and supplies the calculated prediction value M to the prediction value weighting unit 125. The prediction value is derived from neighboring pixels.

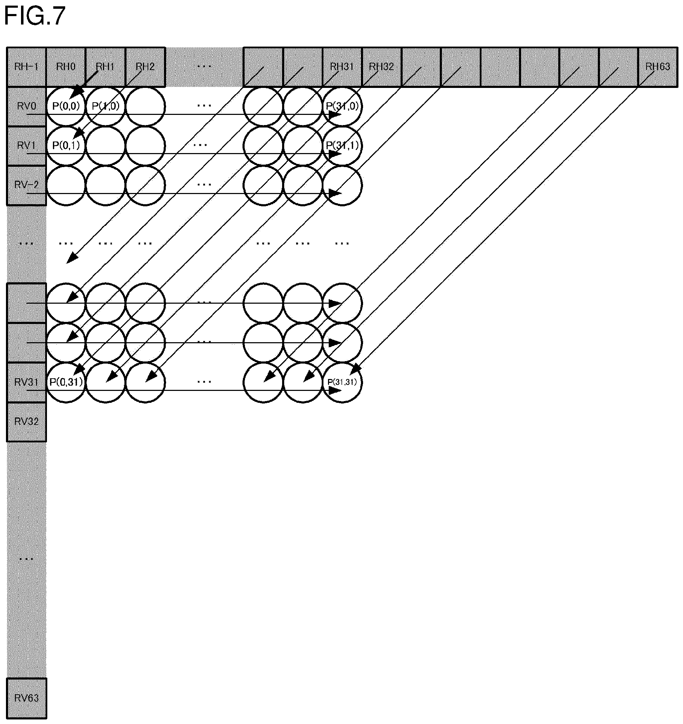

Fig. 7 is a diagram that explains derivation of a prediction value. The block subject to prediction of Fig. 7 is a $32 \times 32$ block. Pixels from P(0,0) to P(31, 31) are located in the block subject to prediction, and the neighboring pixels from RH-1 to RH63 and from RV0 to RV63 are used. In the case no neighboring pixels are available, substitute pixels as defined in HEVC are used for compensation. Fig. 7 shows an example in which the prediction mode count is 2, the selected prediction mode 0 is the prediction mode 10, and the selected prediction mode 1 is the prediction mode 34 (see Fig. 1).

First, a description will be given of derivation of the prediction value in the selected prediction mode 0 in the case the selected prediction mode 0 is the prediction mode 10. For P(0,0), P(1,0), ..., P(31,0), RV0 is defined as the prediction value. For P(0,1), ..., P(31,1), RV1 is defined as the prediction value. For P(0,31), ..., P(31,31), RV31 is defined as the prediction value. A description will then be given of derivation of the prediction value in the selected prediction mode 1 in the case the selected prediction mode 1 is the prediction mode 34. For P(0,0), RH1 is defined as the prediction value. For P(1,0) and P(0,1), RH2 is defined as prediction value. For P(31,31), RH63 is defined as the prediction value. Pixels neighboring the block subject to prediction are not filtered to generate reference pixels as in the case of HEVC. Neighboring pixels are directly used in the embodiment so that the filtering process is not necessary in the embodiment. Derivation of the prediction value is configured to be the same as that of HEVC except that the prediction value is calculated from the reference pixel in HEVC.

Subsequent to S106, the selected prediction mode M is examined to see whether it is not a non-angular intra prediction mode (S110). When the selected prediction mode M is not a non-angular intra prediction mode (YES in S110), control proceeds to S107. When the selected prediction mode M is a non-angular intra prediction mode (NO in S110), control proceeds to S108. It is defined here that the non-angular intra prediction modes are INTRA_PLANAR and INTRA_DC. Thus, an increase in the processing volume is inhibited not only by using neighboring pixels at a particular angle as in INTRA_PLANAR and INTRA_DC but also by using a prediction mode count of 1 instead of permitting a prediction mode count of 2 in the intra prediction modes in which neighboring pixels in a plurality of directions are used. In other words, a prediction mode belonging to the non-angular intra prediction mode group and a prediction mode belonging to the angular intra prediction mode group are not used in combination.

Subsequent to S107, the prediction value weighting unit 125 outputs the prediction value supplied from the prediction value calculation unit 124 directly as the prediction value, provided that the prediction mode count is 1 or the selected prediction mode 0 is the non-angular intra prediction mode. When the prediction mode count is 2, the prediction value weighting unit 125 averages the first prediction value in the selected prediction mode 0 and the second prediction value in the selected prediction mode 1 supplied from the prediction value calculation unit 124 and outputs the resultant value as the third prediction value (S108).

A description will then be given of the function and operation of the parts of the picture decoding device 200. The decoding unit 210 decodes, from the bitstream, the header and other information as necessary, decodes, from the bitstream, a bitstream related to the block size, a bitstream for the intra prediction mode, and prediction error data. The decoding unit 210 supplies the bitstream related to the block size, the bitstream for the intra prediction mode, and the prediction error data as decoded to the block size acquisition unit 220. The bitstream for the intra prediction mode is decoded based on a syntax described later related to the intra prediction mode.

The block size acquisition unit 220 acquires the block size from the bitstream related to the block size supplied from the decoding unit 210. The block size acquisition unit 220 supplies the block size, the bitstream for the intra prediction mode, the prediction error data to the intra prediction unit 230.

The intra prediction unit 230 selects the intra prediction mode from the bitstream for the intra prediction mode. The intra prediction unit 230 derives the prediction value from decoded pixels, based on the selected intra prediction mode. The intra prediction unit 230 supplies the prediction value, the block size, and the prediction error data to the inverse transform unit 240. The decoded pixels are shared by the parts in the picture decoding device 200 and are not shown here.

The calculation of the prediction value in the intra prediction unit 230 is the same as the calculation of the prediction value in the intra prediction selection unit 120. The reproduced picture obtained by the picture coding device 100 and the reproduced picture output by the picture decoding device 200 are the same. In other words, the intra prediction unit 230 and the intra prediction selection unit 120 may have the same configuration so that the intra prediction unit 230 and the intra prediction selection unit 120 are described as having the same configuration in the embodiment.

The operation of the intra prediction unit 230 will be described with reference to the flowchart of Fig. 6 for explaining the operation of the intra prediction selection unit 120. The difference from the intra prediction selection unit 120 resides in S105. In the intra prediction unit 230, S105D described below is performed instead of S105.

The prediction mode selection unit 123 selects one selected prediction mode M based on the bitstream for the intra prediction mode (S105D). The prediction mode selection unit 123 supplies the selected prediction mode M to the prediction value calculation unit 124. The bitstream for the intra prediction mode will be described later.

The inverse transform unit 240 derives a difference value by subjecting the prediction error data supplied from the intra prediction unit 230 to inverse orthogonal transform, quantization etc. The inverse transform unit 240 calculates a reproduced pixel by adding the difference value and the prediction value and outputs the reproduced pixel.

The picture decoding device 200 repeats the above steps until all input bitstreams are decoded.

A description will be given of the detail of the process of generating a prediction mode candidate list. First, coded neighboring block located around the block subject to prediction will be described.

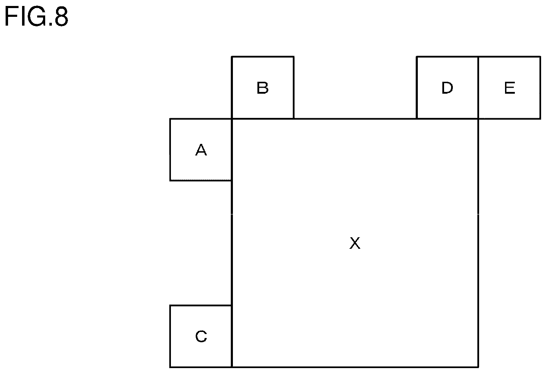

Fig. 8 is a diagram that explains blocks neighboring the block subject to prediction. Referring to Fig. 8, a block X is a block subject to prediction, and a block A through a block E are neighboring blocks. The block A through the block E are defined here as the neighboring blocks. Alternatively, the block A through the block D may be the neighboring blocks. Still alternatively, the block to the left and above the block subject to prediction (the block above the block A) or the block to the left and below (the block below the block C) may be added.

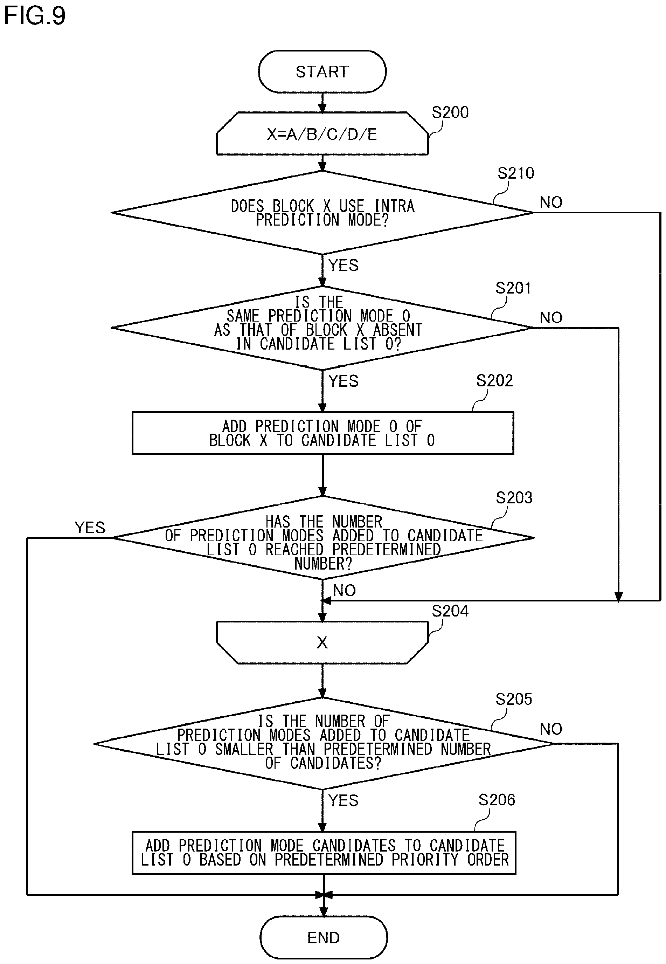

Fig. 9 is a flowchart for explaining the operation of the process of generating a prediction mode candidate list 0. The process of generating a prediction mode candidate list 0 will be described with reference to Fig. 9. It is defined that, initially, the prediction mode candidate list 0 is empty, and the number of candidates included in the prediction mode candidate list 0 is 0. The prediction mode candidate list 0 will be abbreviated as a candidate list 0.

Steps S210, S201, S202, S203 are repeated, defining a block A, a block B, a block C, a block D, and a block E to be a block X in the stated order (S200 and S204).

The block X is examined to see whether intra prediction is used (S210). When intra prediction is used in the block X (YES in S210), control proceeds to S201. When intra prediction is not used in the block X (NO in S210), control proceeds to S204.

Subsequent to S210, when the same selected prediction mode 0 as that of the block X is not found in the candidate list 0 (YES in S201), the selected prediction mode 0 of the block X is added to the candidate list 0 (S202). Subsequently, the number of prediction modes added to the candidate list 0 is examined to see whether it has reached a predetermined number (S203). When the number of prediction modes added to the candidate list 0 has reached the predetermined number (YES in S203), the process is terminated. When the number of prediction modes added to the candidate list 0 has not reached the predetermined number (NO in S203), control proceeds to S204. It is defined here that the predetermined number is 3. When the same selected prediction mode 0 as that of the block X is found in the candidate list 0 (NO in S201), control proceeds to S204.

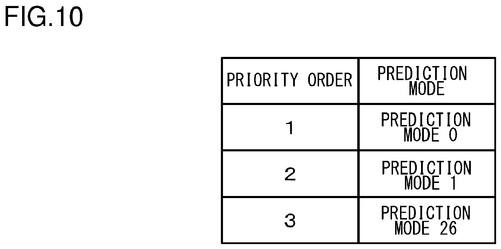

When the number of prediction modes added to the candidate list 0 is smaller than a predetermined number (YES in S205), prediction mode candidates are added to the candidate list 0 based on a predetermined priority order of prediction modes and in the ascending order of priority so that same prediction mode does not duplicate in the candidate list 0 (S206), whereupon the process is terminated. Fig. 10 shows a table showing the predetermined priority order of prediction modes. When the number of prediction modes added to the candidate list 0 is not smaller than the predetermined number (NO in S205), the process is terminated.

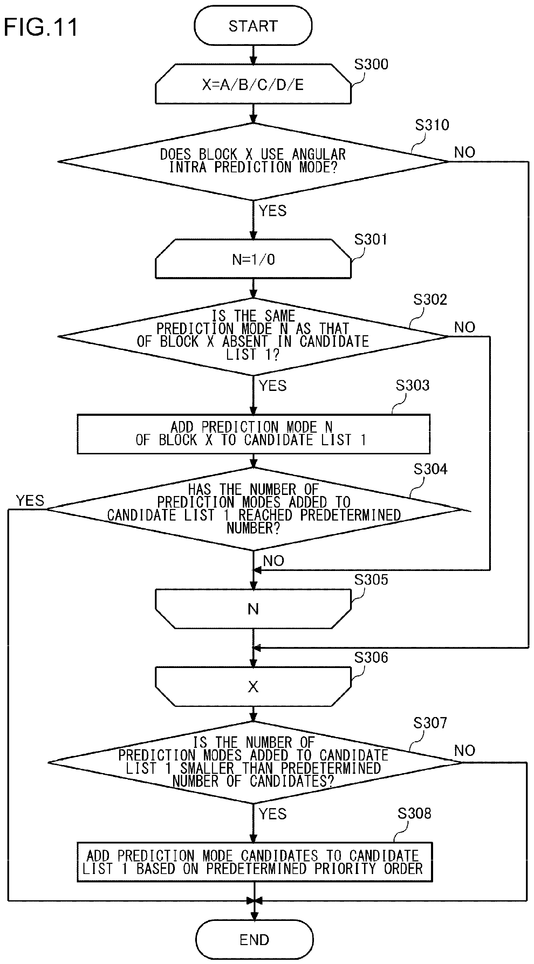

Fig. 11 is a flowchart for explaining the operation of the process of generating a prediction mode candidate list 1. The process of generating a prediction mode candidate list 1 will be described with reference to Fig. 11. It is defined that, initially, the prediction mode candidate list 1 is empty, and the number of candidates included in the prediction mode candidate list 1 is 0. The prediction mode candidate list will be abbreviated as a candidate list.

Steps S310, S301, S302, S303, S304, S305 are repeated, defining a block A, a block B, a block C, a block D, and a block E to be a block X in the stated order (S300 and S306).

The block X is examined to see whether an angular intra prediction mode is used (S310). When an angular intra prediction mode is used in the block X (YES in S310), control proceeds to S301. When intra prediction is not used in the block X (NO in S310), control proceeds to S306.

Given a selected prediction mode N of the block X, the steps S302, S303, and S304 are repeated in the order of the selected prediction mode 1 and the selected prediction mode 0 (S301 and S305).

When the same selected prediction mode N as that of the block X is not found in the candidate list 1 (YES in S302), the prediction mode of the block X is added to the candidate list 1 (S303). Subsequently, the number of prediction modes added to the candidate list 1 is examined to see whether it has reached a predetermined number (S304). When the number of prediction modes added to the candidate list 1 has reached the predetermined number (YES in S304), the process is terminated. When the number of prediction modes added to the candidate list 1 has not reached the predetermined number (NO in S304), control proceeds to S305. It is defined here that the predetermined number is 3. When the same selected prediction mode N as that of the block X is found in the candidate list 1 (NO in S302), control proceeds to S305.

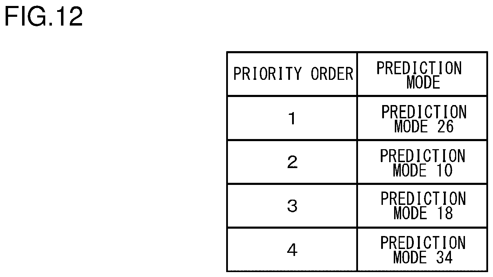

When the number of prediction modes added to the candidate list 1 is smaller than a predetermined number (YES in S307), prediction mode candidates are added to the candidate list 1 based on a predetermined priority order of prediction modes and in the ascending order of priority so that same prediction mode does not duplicate in the candidate list 1 (S308), whereupon the process is terminated. Fig. 12 shows a table showing the predetermined priority order of prediction modes. Unlike the table of Fig. 10, the table of Fig. 12 does not include the non-angular intra prediction modes (the prediction mode 0 and the prediction mode 1). An intra prediction mode in the vertical direction and an intra prediction mode in the horizontal direction are alternately arranged in the priority order. When the number of prediction modes added to the candidate list is not smaller than the predetermined number (NO in S307), the process is terminated.

A description will be given of the benefit obtained by embodiment 1. When the size of the block subject to prediction is large, the likelihood that a plurality of edges are included in the block subject to prediction will be high. When a block is subject to prediction by using only one intra prediction mode in the case a plurality of edges are included in the block subject to prediction, the likelihood that the prediction efficiency is lowered is high.

In the case the size of the block subject to prediction is large, therefore, prediction that uses two intra prediction modes can address the case where edges are found in two directions in the block subject to prediction and can improve the prediction efficiency.

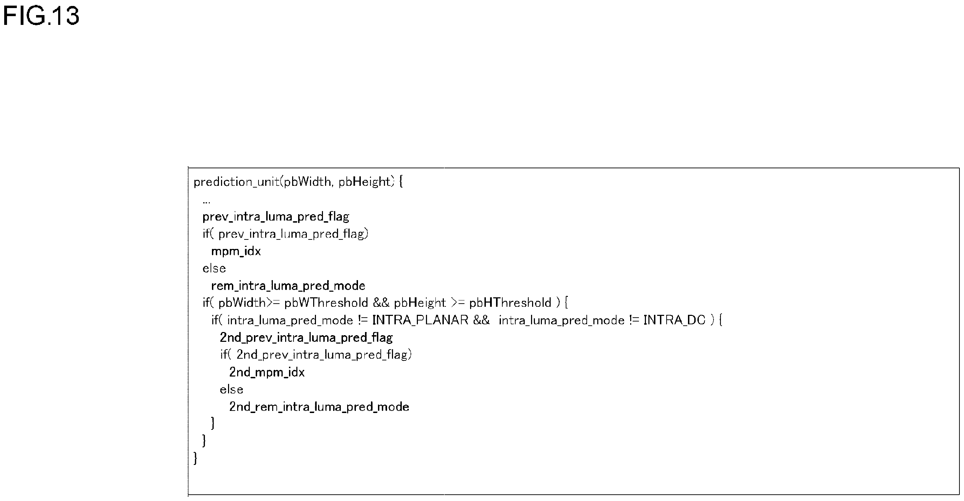

A description will now be given of the detail of the coding of the intra prediction mode (bitstream for the intra prediction mode). Fig. 13 is a diagram that explains a syntax related to the intra prediction mode of embodiment 1.

Fig. 13 shows a syntax of a prediction block, where pbWidth denotes the width of the prediction block, and pbHeight denotes the height of the prediction block. pbWThread denotes a predetermined threshold width, and pbHThread denotes a predetermined threshold height. The intra prediction mode is coded and decoded based on the syntax of Fig. 13.

prev_intra_luma_pred_flag, mpm_idx, and rem_intra_luma_pred_mode are syntaxes related to the selected prediction mode 0. prev_intra_luma_pred_flag is a flag indicating whether the selected prediction mode 0 is selected from the prediction mode candidate list 0. When prev_intra_luma_pred_flag is 1, the selected prediction mode 0 is selected from the prediction mode candidate list 0. When prev_intra_luma_pred_flag is 0, the selected prediction mode 0 is selected from the intra prediction modes not included in the prediction mode candidate list 0. mpm_idx is an index indicating the selected prediction mode 0 selected from the candidates included in the prediction mode candidate list 0. rem_intra_luma_pred_mode is an index indicating the selected prediction mode 0 selected from the candidates not included in the prediction mode candidate list 0.

2nd_prev_intra_luma_pred_flag, 2nd_mpm_idx and 2nd_rem_intra_luma_pred_mode are syntaxes related to the selected prediction mode 1. 2nd_prev_intra_luma_pred_flag is a flag indicating whether the selected prediction mode 1 is selected from the prediction mode candidate list 1. When 2nd_prev_intra_luma_pred_flag is 1, the selected prediction mode 1 is selected from the prediction mode candidate list 1. When 2nd_prev_intra_luma_pred_flag is 0, the selected prediction mode 1 is selected from the intra prediction modes not included in the prediction mode candidate list 1. 2nd_mpm_idx is an index indicating the selected prediction mode 1 selected from the candidates included in the prediction mode candidate list 1. 2nd_rem_intra_luma_pred_mode is an index indicating the selected prediction mode 1 selected from the candidates not included in the prediction mode candidate list 1.

prev_intra_luma_pred_flag, rem_intra_luma_pred_mode, 2nd_prev_intra_luma_pred_flag, and 2nd_rem_intra_luma_pred_mode are subject to fixed-length (FL) binarization, and mpm_idx and 2nd_mpm_idx are subject to truncated rice (TR) binarization.

(Variation 1 of embodiment 1)

A description will now be given of variation 1 of embodiment 1. When calculating a prediction value in the angular intra prediction mode (the prediction modes 2 through 34), the prediction value may be calculated from reference pixels generated by filtering pixels neighboring the block subject prediction instead of calculating the prediction value from pixels neighboring the block subject to prediction in accordance with the respective angles.

Alternatively, the prediction value may be calculated from reference pixels generated by filtering pixels neighboring the block subject to prediction in the case the prediction mode count is 1, and the prediction value may be calculated from pixels neighboring the block subject to prediction in the case the prediction mode count is 2. In this way, the processing volumes consumed in the case the prediction mode count is 1 and in the case the prediction mode count is 2 can be averaged.

(Variation 2 of embodiment 1)

A description will now be given of variation 2 of embodiment 1. In embodiment 1, the prediction mode candidate list 1 is described as being generated as shown in Fig. 11 in a manner different from that of the prediction mode candidate list 0, and the selected prediction mode 1 is selected from the prediction mode candidate list 1. Alternatively, the selected prediction mode 1 may be selected from the prediction mode candidate list 0. This can reduce the process of generating the prediction mode candidate list 1.

Further, the predetermined number of candidates in the prediction mode candidate list 0 may be larger than 3. For example, the predetermined number of candidates in the prediction mode candidate may be 5. In this case, the likelihood that the selected prediction mode 1 is coded in 2nd_mpm_idx will be increased, and the coding efficiency will be increased. In the case the predetermined number is larger than 3, the predetermined priority order of prediction modes may include 4 or more modes. In this case, an intra prediction mode in the vertical direction and an intra prediction mode in the horizontal direction are alternately arranged in the priority order.

(Variation 3 of embodiment 1)

A description will now be given of variation 3 of embodiment 1. In embodiment 1, one selected prediction mode 1 is selected from the prediction modes 0 through 34. In variation 3, the selected prediction mode 1 may be selected from the prediction mode candidate list 1. In this case, 2nd_prev_intra_luma_pred_flag and 2nd_rem_intra_luma_pred_mode of Fig. 13 will be unnecessary, and only 2nd_mpm_idx will be necessary. In this way, the coding efficiency in the selected prediction mode 1 can be improved.

(Variation 4 of embodiment 1)

A description will now be given of variation 4 of embodiment 1. In embodiment 1, the prediction mode candidate list 1 is generated as shown in Fig. 11 irrespective of the selected prediction mode 0. In variation 4, the prediction mode candidate list 1 is generated based on the selected prediction mode 0.

The modes neighboring the selected prediction mode 0 on both sides are added to the prediction mode candidate list 1, as indicated by (expression 1) and (expression 2). In this way, the intermediate prediction mode between two neighboring prediction modes can be generated.

$$\text{prediction mode candidate list 1 [0]=(selected}$$

$$\text{prediction mode 0-1)\%35 ... (expression 1)}$$

$$\text{prediction mode candidate list 1 [1]=(selected}$$

$$\text{prediction mode 0+1)\%35 ... (expression 2)}$$

"%" is a remainder operator, and "35" is the number of intra prediction modes. In other words, the remainder from dividing (selected prediction mode 0-1) by 35 is added to the prediction mode candidate list 1[0]. Similarly, the remainder from dividing "(selected prediction mode 0+1) by 35 is added to the prediction mode candidate list 1[1]. The remainder is accommodated in the range 0-34.

Since the selected prediction mode 0 cannot be the non-angular intra prediction mode, the selected prediction mode 0 will not be the prediction mode 0 or the prediction mode 1. When the selected prediction mode 0 is the prediction mode 2, therefore, the prediction mode candidate list 1[0] will be the prediction mode 1. However, the prediction mode 1 is an non-angular intra prediction mode and so is defined to be invalid. Similarly, when the selected prediction mode 0 is the prediction mode 34, the prediction mode candidate list 1[1] will be the prediction mode 0. However, the prediction mode 0 is an non-angular intra prediction mode and so is defined to be invalid.

The syntax related to the intra prediction mode also differs.

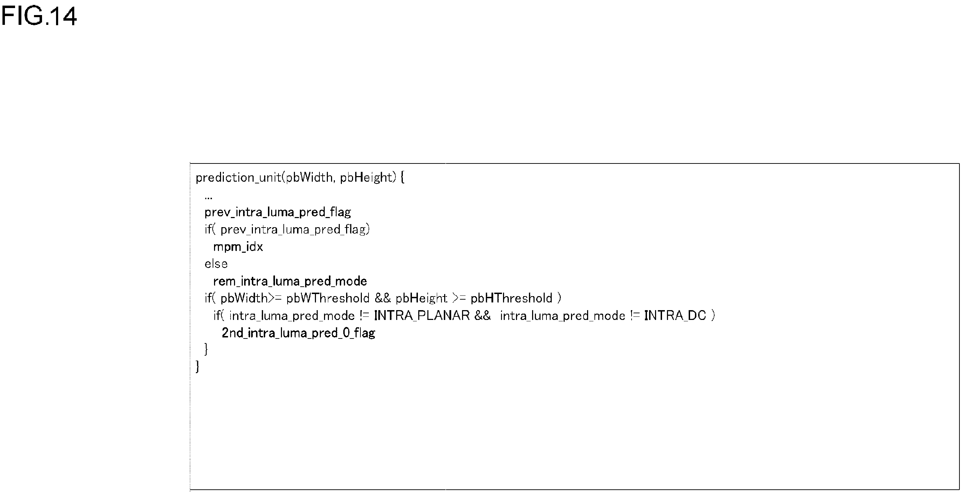

Fig. 14 is a diagram that explains a syntax related to the intra prediction mode of variation 4 of embodiment 1; When 2nd_intra_luma_pred_0_flag is 1, the prediction mode candidate list 1[0] is selected as the selected prediction mode 1. When 2nd_intra_luma_pred_0_flag is 0, the prediction mode candidate list 1[1] is selected as the selected prediction mode 1. In this way, the coding efficiency of the selected prediction mode 1 can be improved. When the selected prediction mode 0 is the prediction mode 2 or the prediction mode 34, the intra prediction mode is uniquely determined to be 0. It is therefore unnecessary to code or decode 2nd_intra_luma_pred_0_flag. In this way, the coding efficiency and the processing efficiency can be further improved.

(Variation 5 of embodiment 1)

A description will now be given of variation 5 of embodiment 1. The prediction value weighting unit 125 of embodiment 1 simply averages the prediction value in the selected prediction mode 0 and the prediction value in the selected prediction mode 1 to obtain the prediction value, when the prediction mode count is 2. In variation 5, a weighted average of the prediction value in the selected prediction mode 0 and the prediction value in the selected prediction mode 1 is calculated in accordance with the distance and the resultant value is defined as the prediction value.

Denoting the distance between the pixel subject to prediction and the neighboring pixel N0 in the selected prediction mode 0 by d0 and the distance between the pixel subject to prediction and the neighboring pixel N1 in the selected prediction mode 1 by d1, a prediction value PP from weighted averaging is calculated according to (expression 3).

$$\text{PP=(N0*d1+N1*d0)/(d0+d1) ... (expression 3)}$$

(Variation 6 of embodiment 1)

A description will now be given of variation 6 of embodiment 1. In embodiment 1, whether to set the prediction mode count to 1 or 2 is determined by examining whether the width of the block subject to prediction is equal to or larger than the predetermined threshold width and the height of the block subject to prediction is equal to or larger than the predetermined threshold height. Alternatively, a prediction mode count flag indicating whether the prediction mode count is 1 or 2 may be coded (decoded) to designate the count. This allows more precise control using a flag and so improves the prediction efficiency.

(Embodiment 2)

A description will now be given of embodiment 2, which does not form part of the claimed invention. The configuration and operation of the intra prediction selection unit of embodiment 2 differ from those of embodiment 1.

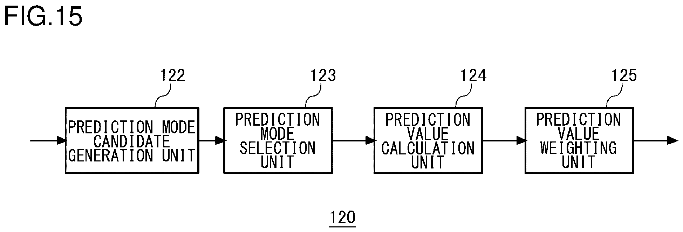

Fig. 15 shows a configuration of the intra prediction selection unit 120 according to embodiment 2 of the present invention. The intra prediction selection unit 120 includes the prediction mode candidate generation unit 122, the prediction mode selection unit 123, the prediction value calculation unit 124, and the prediction value weighting unit 125.

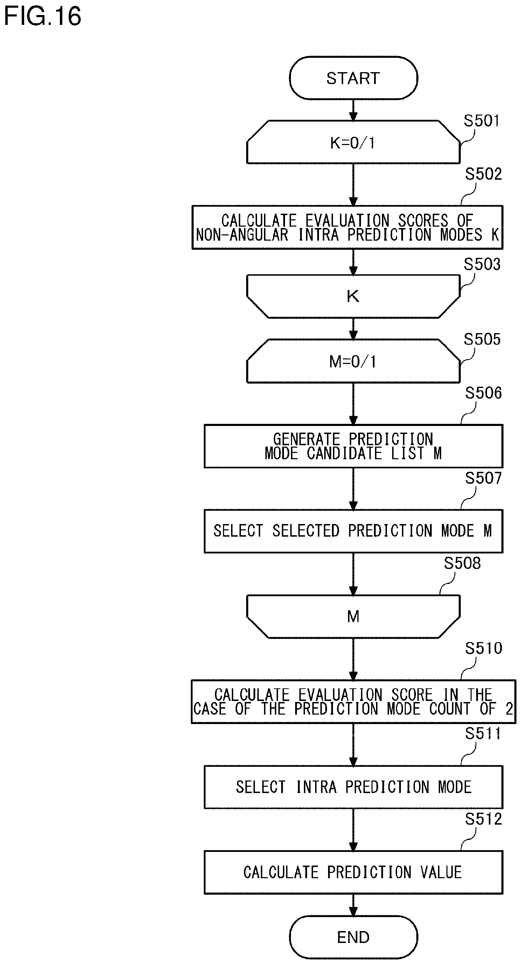

Fig. 16 is a flowchart for explaining the operation of the intra prediction selection unit 120. The detail of the intra prediction selection unit 120 will be explained hereinafter with reference to Figs. 15 and 16. Initially, the prediction mode candidate generation unit 122 repeats S501 through S503 to calculate evaluation scores of non-angular intra prediction modes K, the number of repetitions being determined by the number of the non-angular intra prediction modes K (S502). When K is 0, the evaluation score of INTRA_PLANAR is calculated. When K is 1, the evaluation score of INTRA_DC is calculated.

The prediction mode candidate generation unit 122 repeats S505 through S508, the number of repetition being determined by the number of prediction mode candidate lists M. The prediction mode candidate generation unit 122 generates the prediction mode candidate list M from the coded neighboring blocks located around the block subject to prediction (S506) and supplies the prediction mode candidate list M thus generated to the prediction mode selection unit 123. The prediction mode candidate list M is generated to include the intra prediction modes in the horizontal direction when M is 0 and to include the intra prediction modes in the vertical direction when M is 1. The non-angular intra prediction modes will not be included in the prediction mode candidate list M.

In the case of the prediction mode candidate list 0, the prediction mode candidate generation unit 122 calculates the prediction value and the evaluation score for each of the prediction modes 2 through 17, which are intra prediction modes in the horizontal direction included in the prediction mode candidate list 0, and selects one selected prediction mode 0 from the prediction modes 2 through 17, based on the evaluation scores of the respective prediction modes thus calculated.

In the case of the prediction mode candidate list 1, the prediction mode candidate generation unit 122 calculates the prediction value and the evaluation score for each of the prediction modes 18 through 34, which are intra prediction modes in the vertical direction included in the prediction mode candidate list 1, and selects one selected prediction mode 1 from the prediction modes 18 through 34, based on the evaluation scores of the respective prediction modes thus calculated (S507). As described above, M=0 means the intra prediction mode in the horizontal direction, and M=1 means the intra prediction mode in the vertical direction. In other words, M indicates the direction of the intra prediction mode.

The prediction mode candidate generation unit 122 then subjects the prediction value in the selected prediction mode 0 and the prediction value in the selected prediction mode 1 to weighted averaging to calculate the evaluation score in the case of the prediction mode count 2 of 2 (S510). The prediction mode selection unit 123 then selects one intra prediction mode from the prediction mode 0, the prediction mode 1, and the prediction mode count of 2, based on the evaluation scores of the prediction mode 0, the prediction mode 1, and the prediction mode count of 2. The prediction value weighting unit 125 outputs the prediction value based on the selected intra prediction mode (S512).

Further, the syntax related to the intra prediction mode in embodiment 2 differs from that of embodiment 1.

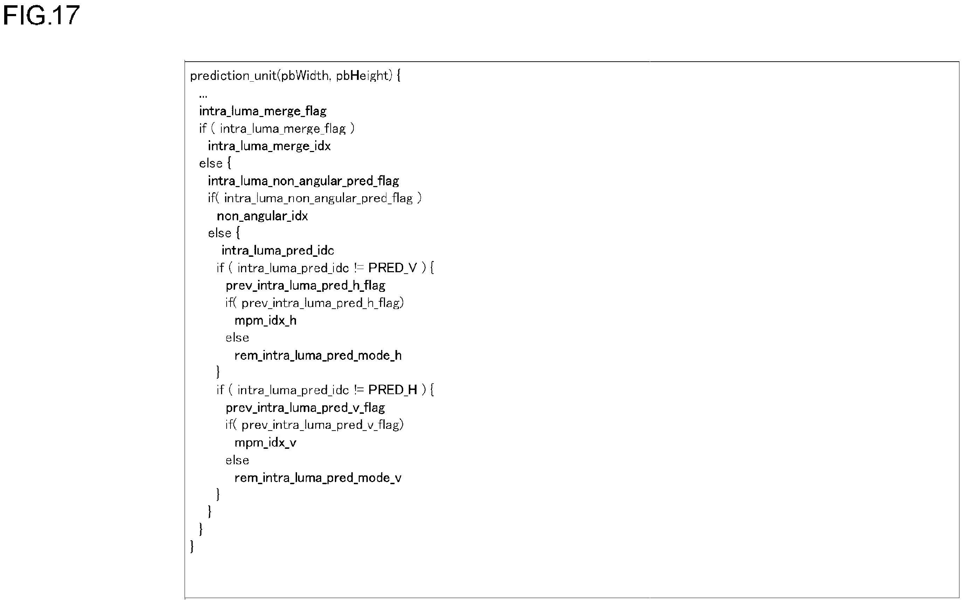

Fig. 17 is a diagram that explains a syntax related to the intra prediction mode of embodiment 2. The intra prediction mode is coded or decoded based on the syntax of Fig. 17.

intra_luma_merge_flag indicates a merge flag indicating whether to use, as the prediction mode count and the intra prediction mode of the block subject to prediction, the prediction mode count and the intra prediction mode of the neighboring block.

intra_luma_merge_idx indicates the neighboring block having the prediction mode count of the block subject to prediction, having the prediction mode number to be used as the intra prediction mode and having the intra prediction mode of the block subject to prediction.

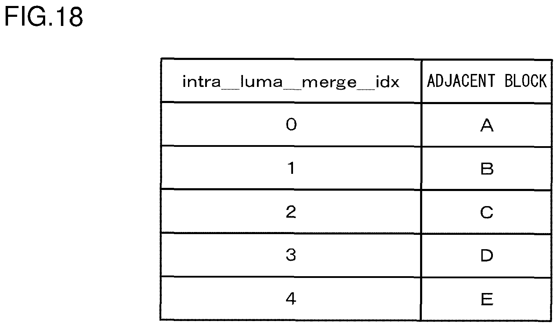

Fig. 18 is a table showing the relationship between intra_luma_merge_idx and the neighboring block. In the case i) intra_luma_merge_idx is 0 and ii) the prediction mode count is 1 and the selected prediction mode 0 is the prediction mode 3 in the neighboring block A, the prediction mode count will be 1 and the selected prediction mode 0 will be the prediction mode 3 in the block subject to prediction. In another example, in the case i) intra_luma_merge_idx is 2 and ii) the prediction mode count in the neighboring block C is 2, and iii) the selected prediction mode 0 is the prediction mode 3 and the selected prediction mode 1 is the prediction mode 20 in the neighboring block C, the prediction mode count will be 2, the selected prediction mode 0 will be the prediction mode 3, and the selected prediction mode 1 will be the prediction mode 20 in the block subject to prediction.

intra_luma_non_angular_pred_flag is a flag indicating whether the mode is a non-angular intra prediction mode or not. When the flag indicating whether the mode is a non-angular intra prediction mode indicates that the mode is a non-angular intra prediction mode (intra_luma_non_angular_pred_flag is 1), non_angular_idx is coded (decoded), and the intra prediction mode indicated by non_angular_idx is selected as the selected intra prediction mode. non_angular_idx indicates the prediction mode that is a non-angular intra prediction mode. When non_angular_idx is 0, INTRA_PLANAR is indicated. When non_angular_idx is 1, INTRA_DC is indicated. When the flag indicating whether the mode is a non-angular intra prediction mode indicates that the mode is not a non-angular intra prediction mode (intra_luma_non_angular_pred_flag is 0), indices like prev_intra_luma_pred_h_flag and rem_intra_luma_pred_mode_h are coded (decoded), and the intra prediction mode other than the non-angular intra prediction modes is selected as the selected intra prediction mode.

intra_luma_pred_idc indicates the prediction mode count and the direction of intra prediction. When intra_luma_pred_idc is 0, it indicates the prediction mode count of 1 and the intra prediction mode in the horizontal direction. When intra_luma_pred_idc is 1, it indicates the prediction mode count of 1 and the intra prediction mode in the vertical direction. When intra_luma_pred_idc is 2, it indicates that the prediction mode count is 2.

prev_intra_luma_pred_h_flag, mpm_idx_h, and rem_intra_luma_pred_mode_h are syntaxes related to the intra prediction mode in the horizontal direction.
prev_intra_luma_pred_v_flag, mpm_idx_v, and
rem_intra_luma_pred_mode_v are syntaxes related to the intra prediction mode in the vertical direction. The non-angular intra prediction mode will not be included in rem_intra_luma_pred_mode_h and rem_intra_luma_pred_mode_v.

In embodiment 2, by using a merge flag for directly using the intra prediction mode of the block neighboring the block subject to prediction, the coding efficiency in the case the prediction mode count is 2 or the coding efficiency in the prediction mode not found in the prediction mode candidate list can be improved.

Further, by classifying the intra prediction modes into: the prediction mode 0 and the prediction mode 1 that are non-angular intra prediction modes; the prediction modes 2 through 17 that are intra prediction modes in the horizontal direction; and the prediction modes 18 through 34 that are intra prediction modes in the vertical direction, and by dividing the syntax related to the intra prediction mode into: syntax elements for non-angular intra prediction modes; syntax elements for prediction in the horizontal direction; and syntax elements for prediction in the vertical direction, the coding efficiency can be improved when the prediction mode not found in the prediction mode candidate list is selected.

In other words, coding (decoding) intra_luma_non_angular_pred_flag, before rem_intra_luma_pred_mode_h or rem_intra_luma_pred_mode_v makes it unnecessary to include the non-angular intra prediction mode in rem_intra_luma_pred_mode_h or rem_intra_luma_pred_mode_v in addition to the intra prediction mode candidates included in the prediction mode candidate list. This can increase the number of angular intra prediction modes that can be designated by rem_intra_luma_pred_mode_h or rem_intra_luma_pred_mode_v so that the coding efficiency can be improved. In the case of intra prediction modes in the horizontal direction, for example, the number of intra prediction modes may be increased by defining a new angle between the prediction mode 9 and the prediction mode 10 or between the prediction mode 10 and the prediction mode 11. In the case of intra prediction modes in the vertical direction, a new angular intra prediction mode may be provided between the prediction mode 25 and the prediction mode 26 or between the prediction mode 26 and the prediction mode 27.

Further, the likelihood that the non-angular intra prediction mode is selected is generally higher than that of the angular intra prediction mode. For this reason, coding (decoding) intra_luma_non_angular_pred_flag, which is an independent syntax indicating the non-angular intra prediction mode, before mpm_idx_h or mpm_idx_v makes it unnecessary to include the non-angular intra prediction mode in the prediction mode candidate list 0 or the prediction mode candidate list 1. In the case the selected prediction mode is a non-angular intra prediction mode, therefore, the processing cost for generating the prediction mode candidate list 0 or the prediction mode candidate list 1 can be eliminated.

The merge flag and the classification of the syntax advantageously improves the coding efficiency in the case the number of non-angular intra prediction modes is increased beyond 2 or in the case the types of non-angular intra prediction modes or the angles of intra prediction modes are classified in further details. intra_luma_merge_idx, intra_luma_non_angular_pred_flag, and non_angular_idx can be equally applied before mpm_idx in the syntax of Fig. 2 according to the related art or in the syntax of Fig. 13 or Fig. 14 according to embodiment 1.

(Variation 1 of embodiment 2)

A description will now be given of variation 1 of embodiment 2. In embodiment 2, the prediction mode candidate list 0 is defined to include intra prediction modes in the horizontal direction, and the prediction mode candidate list 1 is defined to include intra prediction modes in the vertical direction so that the prediction mode candidate list and the classification of the syntax related to the intra prediction mode are consistent with each other. However, the embodiment is non-limiting as to the configuration.

As in the case of the prediction mode candidate list of embodiment 1, the prediction mode candidate list may include all of the non-angular intra prediction mode, the intra prediction mode in the horizontal direction, and the intra prediction mode in the vertical direction.

(Variation 2 of embodiment 2)

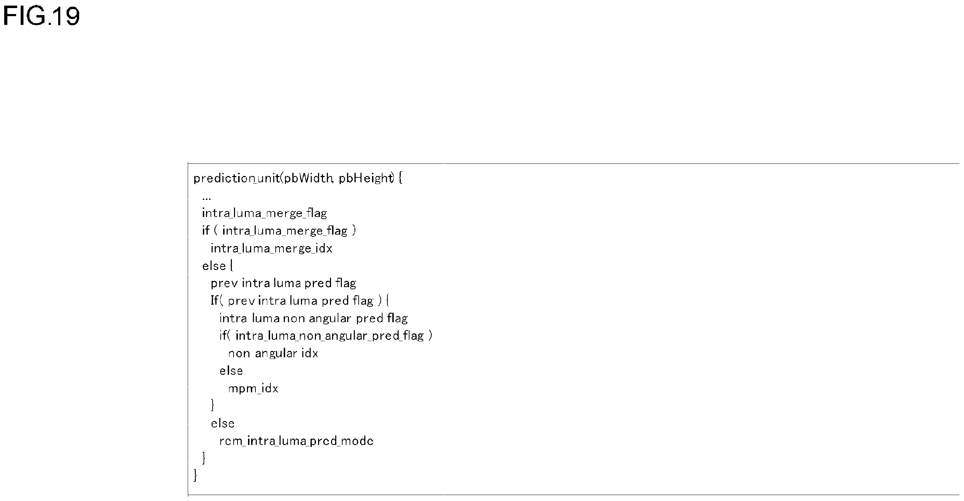

A description will be given of a case in which the prediction mode candidate list includes the intra prediction mode in the horizontal direction and the intra prediction in the vertical direction. It should be noted, however, that the non-angular intra prediction mode is not included in the prediction mode candidate list. Fig. 19 is a diagram that explains a syntax related to the intra prediction mode according to variation 2 of embodiment 2. The intra prediction mode is coded or decoded based on the syntax of Fig. 19.

When prev_intra_luma_pred_flag is 1, the selected prediction mode is selected from the non-angular intra prediction modes or the prediction candidate mode list. When the flag indicating whether the mode is a non-angular intra prediction mode indicates that the mode is a non-angular intra prediction mode, the non-angular intra prediction mode indicated by non_angular_idx is selected as the selected intra prediction mode. When the flag indicating whether the mode is a non-angular intra prediction mode indicates that the mode is not a non-angular intra prediction mode, the mpm index (mpm_idx) is coded (decoded), and the intra prediction mode candidate included in the prediction mode candidate list and indicated by mpm_idx is selected as the selected prediction mode. When prev_intra_luma_pred_flag is 0, the intra prediction mode indicated by rem_intra_luma_pred_mode is selected as the selected prediction mode from the intra prediction modes that are not non-angular intra prediction modes and that are not included in the prediction mode candidate list.

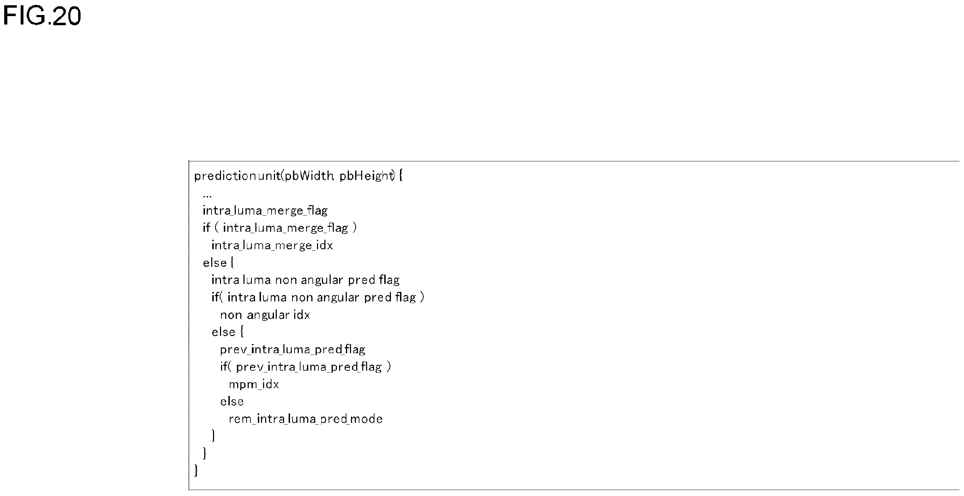

Fig. 20 is a diagram that explains another syntax related to the intra prediction mode of variation 2 of embodiment 2. The intra prediction mode is coded or decoded based on the syntax of Fig. 20.

When intra_luma_non_angular_pred_flag is 1, the non-angular intra prediction mode indicated by non_angular_idx is selected as the selected intra prediction mode. When intra_luma_non_angular_pred_flag is 0 and prev_intra_luma_pred_flag is 1, the intra prediction mode candidate included in the prediction mode candidate list and indicated by mpm_idx is selected as the selected prediction mode. When intra_luma_non_angular_pred_flag is 0 and prev_intra_luma_pred_flag is 0, the intra prediction mode indicated by rem_intra_luma_pred_mode is selected as the selected prediction mode from the intra prediction modes that are not non-angular intra prediction modes and that are not included in the prediction mode candidate list.

According to variation 2 of embodiment 2, rem_intra_luma_pred_mode may only indicate any of 30 intra prediction modes excluding, from the total of 35 intra prediction modes, the intra prediction mode candidates and the non-angular intra prediction modes. The coding efficiency can be improved by introducing new intra prediction modes. For example, as a new intra prediction mode, a new angular intra prediction mode may be provided between the prediction mode 9 and the prediction mode 10, between the prediction mode 10 and the prediction mode 11, between the prediction mode 25 and the prediction mode 26, or between the prediction mode 26 and the prediction mode 27. Further, referring to Fig. 20, the non-angular intra prediction mode can be coded (decoded) with intra_luma_non_angular_pred_flag and non_angular_idx. Therefore, the processing efficiency and the coding efficiency are improved in the case the likelihood of selection of the non-angular intra prediction mode is higher than that of the other intra prediction modes.

(Variation 3 of embodiment 2)

A description will now be given of a case in which the prediction candidate list includes the non-angular intra prediction mode INTRA_DC, the intra prediction modes in the horizontal direction, and the intra prediction modes in the vertical direction. It should be noted, however, that INTRA_PLANAR is not included in the prediction mode candidate list. In embodiment 2, the flag (intra_luma_non_angular_pred_flag) indicating whether the mode is a non-angular intra prediction mode is coded (decoded). In variation 3 of embodiment 2, the flag indicating whether the mode is a non-angular intra prediction mode is coded (decoded), by further limiting the flag to indicate whether the mode is INTRA_PLANAR, the intra prediction mode that is most likely selected among the intra prediction modes. When the selected prediction mode is INTRA_PLANAR, it is not necessary to code (decode) non_angular_idx so that the coding efficiency of INTRA_PLANAR can be improved. When the flag indicating whether the mode is INTRA_PLANAR indicates that the mode is INTRA_PLANAR, INTRA_PLANAR is selected as the selected prediction mode. Referring to Fig. 19, when the flag indicating whether the mode is INTRA_PLANAR indicates that the mode is not INTRA_PLANAR, mpm_idx is coded (decoded), and the intra prediction mode other than INTRA_PLANAR is selected as the selected intra prediction mode. Referring to Fig. 20, when the flag indicating whether the mode is INTRA_PLANAR indicates that the mode is not INTRA_PLANAR, indices like prev_intra_luma_pred_flag, mpm_idx, etc. are coded (decoded), and the intra prediction mode other than INTRA_PLANAR is selected as the selected intra prediction mode.

According to variation 3 of embodiment 2, rem_intra_luma_pred_mode may only indicate any of 31 intra prediction modes excluding, from the total of 35 intra prediction modes, the prediction mode candidates and INTRA_PLANAR. The coding efficiency can be improved by introducing new intra prediction modes. For example, as a new intra prediction mode, a new angular intra prediction mode may be provided between the prediction mode 9 and the prediction mode 10, between the prediction mode 10 and the prediction mode 11, between the prediction mode 25 and the prediction mode 26, or between the prediction mode 26 and the prediction mode 27. Further, referring to Fig. 20, INTRA_PLANAR can be coded with only one flag intra_luma_non_angular_pred_flag. Therefore, the processing efficiency and the coding efficiency are optimized in the case the likelihood of selection of INTRA_PLANAR is relatively higher than that of the other intra prediction modes. Further, referring to Fig. 19, INTRA_PLANAR can be coded with two flags prev_intra_luma_pred_flag and intra_luma_non_angular_pred_flag. Therefore, the processing efficiency and the coding efficiency are improved in the case the likelihood of selection of INTRA_PLANAR is relatively higher than that of the other intra prediction modes.

The bitstream output by the picture coding device according to the embodiments described above has a unique data format so that the bitstream can be decoded according to the coding method used in the embodiments. The picture decoding device compatible with the picture coding device can decode the bitstream having this unique data format.

When a wired or wireless network is used to exchange a bitstream between the picture coding device and the picture decoding device, the bitstream may be transformed into a data format suited to the transmission mode of the communication channel and transmitted accordingly. In that case, a picture transmission device for transforming the bitstream output by the picture coding device into coded data of a data format suited to the transmission mode of the communication channel and a picture reception device for receiving the coded data from the network, restoring the bitstream, and supplying the bitstream to the picture decoding device are provided.

The picture transmission device includes a memory for buffering the bitstream output by the picture coding device, a packet processing unit for packetizing the bitstream into coded data, and a transmission unit for transmitting the packetized coded data via the network. The picture reception device includes a reception unit that receives the packetized coded data via the network, a packet processing unit that processes the received coded data to restore the bitstream, and a memory that buffers the bitstream. The bitstream in the buffer is supplied to the picture decoding device.

Further, a display device may be provided by adding a display unit for displaying the picture decoded by the picture decoding device. In that case, the display unit displays a decoded picture signal decoded by the picture decoding device on a screen.

Further, an imaging device may be provided by adding an imaging unit and inputting the captured picture to the picture coding device. In that case, the imaging unit inputs the picture signal capturing the picture to the block size determination unit 110.

The above-described processes related to coding and decoding can of course be implemented by transmission, storage, and a receiving device using hardware and can also be implemented by firmware stored in a read-only memory (ROM), a flash memory, etc., or by software on a computer, etc. The firmware program or the software program may be made available on a recording medium that can be read from, for example, a computer. Alternatively, the program may be made available from a server via a wired or wireless network. Still alternatively, the program may be made available in the form of data broadcast over terrestrial or satellite digital broadcast systems.

Described above is an explanation based on an exemplary embodiment.

[INDUSTRIAL APPLICABILITY]

The present invention is applicable to a picture coding device, a picture coding method, and a picture coding program for coding or decoding a picture by using intra prediction and to a picture decoding device, a picture decoding method, and a picture decoding program for decoding a picture by using intra prediction.

[REFERENCE SIGNS LIST]

100 picture coding device, 110 block size determination unit, 120 intra prediction selection unit, 130 transform unit, 140 coding unit, 200 picture decoding device, 210 decoding unit, 220 block size acquisition unit, 230 intra prediction unit, 240 inverse transform unit

**Claims**

1. A picture decoding device (200) comprising:

a prediction mode candidate generation unit (122) that generates a first intra prediction mode candidate list (candidate list 0) and a second intra prediction mode candidate list (candidate list 1), based on an intra prediction mode of a block neighboring a block subject to prediction;
a decoding unit (210) that decodes a first flag (prev_intra_luma_pred_flag) indicating whether or not a first intra prediction mode (selected prediction mode 0) of the block subject to prediction is included in the first intra prediction mode candidate list, and when the first flag is true decodes a first candidate identifying index (mpm_idx), when the first flag is false decodes an intra prediction mode index (rem_intra_luma_pred_mode) selected from candidates not included in the first prediction mode candidate list, and decodes a second flag (2nd_intra_luma_pred_0_flag) when the first intra prediction mode of the block subject to prediction is not an non-angular intra prediction mode and when the size of the block subject to prediction is larger than a threshold (pbWThreshold, pbHThreshold);
a prediction mode selection unit (123) that when the first flag is true selects the first intra prediction mode of the block subject to prediction from the first intra prediction mode candidate list based on the first candidate identifying index, when the first flag is false selects the first intra prediction mode of the block subject to prediction based on the intra prediction mode index, when the first selected intra prediction mode is an angular intra prediction mode and when the size of the block subject to prediction is larger than the threshold (pbWThreshold, pbHThreshold)selects a second intra prediction mode (selected prediction mode 1)of the block subject to prediction from the second intra prediction mode candidate list based on the second flag; and

a prediction value calculation unit (124) that calculates a prediction value from a decoded pixel neighboring the block subject to prediction, based on the first intra prediction mode of the block subject to prediction or based on an average of prediction values calculated based on the first intra prediction mode of the block subject to prediction and the second intra prediction mode of the block subject to prediction, if the second intra prediction mode of the block subject to prediction is selected,

wherein the prediction mode candidate generation unit (122) includes in the second intra prediction mode candidate list intra prediction modes indicated by remainders derived from adding 1 to and subtracting 1 from the first selected intra prediction mode included in the first intra prediction mode candidate list and dividing results of addition and subtraction by the number of intra prediction modes, when the first selected prediction mode is prediction mode 2 or prediction mode 34, the intra prediction mode is uniquely determined to be 0 and the second flag is not coded or decoded.

2. A picture decoding method comprising:

a prediction mode candidate generation step of generating a first intra prediction mode candidate list (candidate list 0) and a second intra prediction mode candidate list(candidate list 1), based on an intra prediction mode of a block neighboring a block subject to prediction;

a decoding step of decoding a first flag (prev_intra_luma_pred_flag) indicating whether or not a first intra prediction mode (selected prediction mode 0)of the block subject to prediction is included in the first intra prediction mode candidate list, and when the first flag is true decoding a first candidate identifying index (mpm_idx), when the first flag is false decodes an intra prediction mode index (rem_intra_luma_pred_mode) selected from candidates not included in the first prediction mode candidate list, and decodes a second flag (2nd_intra_luma_pred_0_flag) when the first intra prediction mode of the block subject to prediction is not an non-angular intra prediction mode and when the size of the block subject to prediction is larger than a threshold (pbWThreshold, pbHThreshold);

a prediction mode selection step of when the first flag is true selecting the first intra prediction mode of the block subject to prediction from the first intra prediction mode candidate list based on the first candidate identifying index, when the first flag is false selects the first intra prediction mode of the block subject to prediction based on the intra prediction mode index, when the first selected intra prediction mode is an angular intra prediction mode and when the size of the block subject to prediction is larger than the threshold (pbWThreshold, pbHThreshold)selecting a second intra prediction mode (selected prediction mode 1)of the block subject to prediction from the second intra prediction mode candidate list based on the second flag; and

a prediction value calculation step of calculating a prediction value from a decoded pixel neighboring the block subject to prediction, based on the first intra prediction mode of the block subject to prediction or based on an average of prediction values calculated based on the first intra prediction mode of the block subject to prediction and the second intra prediction mode of the block subject to prediction, if the second intra prediction mode of the block subject to prediction is selected,

wherein the prediction mode candidate generation step includes in the second intra prediction mode candidate list intra prediction modes indicated by remainders derived from adding 1 to and subtracting 1 from the first selected intra prediction mode included in the first intra prediction mode candidate list and dividing results of addition and subtraction by the number of intra prediction modes, when the first selected prediction mode is prediction mode 2 or prediction mode 34, the intra prediction mode is uniquely determined to be 0 and the second flag is not coded or decoded.

3. A picture decoding program causing a computer to execute:

a prediction mode candidate generation step of generating a first intra prediction mode candidate list (candidate list 0) and a second intra prediction mode candidate list (candidate list 1), based on an intra prediction mode of a block neighboring a block subject to prediction;

a decoding step of decoding a first flag (prev_intra_luma_pred_flag) indicating whether or not a first intra prediction mode (selected prediction mode 0) of the block subject to prediction is included in the first intra prediction mode candidate list, and when the first flag is true decoding a first candidate identifying index (mpm_idx), when the first flag is false decodes an intra prediction mode index (rem_intra_luma_pred_mode) selected from candidates not included in the first prediction mode candidate list, and decodes a second flag (2nd_intra_luma_pred_0_flag) when the first intra prediction mode of the block subject to prediction not an non-angular intra prediction mode and when the size of the block subject to prediction is larger than a threshold (pbWThreshold, pbHThreshold);

a prediction mode selection step of when the first flag is true selecting the first intra prediction mode of the block subject to prediction from the first intra prediction mode candidate list based on the first candidate identifying index, when the first flag is false selects the first intra prediction mode of the block subject to prediction based on the intra prediction mode index, when the first selected intra prediction mode is an angular intra prediction mode and when the size of the block subject to prediction is larger than the threshold (pbWThreshold, pbHThreshold) selecting a second intra prediction mode (selected prediction mode 1) of the block subject to prediction from the second intra prediction mode candidate list based on the second flag; and

a prediction value calculation step of calculating a prediction value from a decoded pixel neighboring the block subject to prediction, based on the first intra prediction mode of the block subject to prediction or based on an average of prediction values calculated based on the first intra prediction mode of the block subject to prediction and the second intra prediction mode of the block subject to prediction, if the second intra prediction mode of the block subject to prediction is selected,

wherein the prediction mode candidate generation step includes in the second intra prediction mode candidate list intra prediction modes indicated by remainders derived from adding 1 to and subtracting 1 from the first selected intra prediction mode included in the first intra prediction mode candidate list and dividing results of addition and subtraction by the number of intra prediction modes, when the first selected prediction mode is prediction mode 2 or prediction mode 34, the intra prediction mode is uniquely determined to be 0 and the second flag is not coded or decoded.

4. A picture coding device comprising:

a prediction mode candidate generation unit (122) that generates a first intra prediction mode candidate list (candidate list 0) and a second intra prediction mode candidate list (candidate list 1), based on an intra prediction mode of a block neighboring a block subject to prediction;

a coding unit (140) that when a first intra prediction mode (selected prediction mode 0) of the block subject to prediction is included in the first intra prediction mode candidate list codes the first flag as true and codes a first candidate identifying index, when the intra prediction mode of the block subject to prediction is not included in the first intra prediction mode candidate list codes the first flag as false and codes an intra prediction mode index selected from candidates not included in the first prediction mode candidate list and codes a second flag when the first intra prediction mode of the block subject to prediction is not an non-angular intra prediction mode and when the size of the block subject to prediction is larger than a threshold (pbWThreshold, pbHThreshold);

a prediction mode selection unit (123) that when the first flag is true selects the first intra prediction mode of the block subject to prediction from the first intra prediction mode candidate list based on the first candidate identifying index, when the first flag is false selects the first intra prediction mode of the block subject to prediction based on the intra prediction mode index, when the first selected intra prediction mode is an angular intra prediction mode and when the size of the block subject to prediction is larger than the threshold (pbWThreshold, pbHThreshold) selects a second intra prediction mode (selected prediction mode 1) of the block subject to prediction from the second intra prediction mode candidate list based on the second flag; and

a prediction value calculation unit (124) that calculates a prediction value from a coded pixel neighboring the block subject to prediction, based on the first intra prediction mode of the block subject to prediction or based on an average of prediction values calculated based on the first intra prediction mode of the block subject to prediction and the second intra prediction mode of the block subject to prediction, if the second intra prediction mode of the block subject to prediction is selected,

wherein the prediction mode candidate generation unit (122) includes in the second intra prediction mode candidate list intra prediction modes indicated by remainders derived from adding 1 to and subtracting 1 from the first selected intra prediction mode included in the first intra prediction mode candidate list and dividing results of addition and subtraction by the number of intra prediction modes, when the first selected prediction mode is prediction mode 2 or prediction mode 34, the intra prediction mode is uniquely determined to be 0 and the second flag is not coded or decoded.

5. A picture coding method comprising:

a prediction mode candidate generation step of generating a first intra prediction mode candidate list (candidate list 0) and a second intra prediction mode candidate list (candidate list 1), based on an intra prediction mode of a block neighboring a block subject to prediction;

a coding step of when a first intra prediction mode (selected prediction mode 0) of the block subject to prediction is included in the first intra prediction mode candidate list coding the first flag as true and coding a first candidate identifying index, when the intra prediction mode of the block subject to prediction is not included in the first intra prediction mode candidate list codes the first flag as false and codes an intra prediction mode index selected from candidates not included in the first prediction mode candidate list and codes a second flag when the first intra prediction mode of the block subject to prediction is not an non-angular intra prediction mode and when the size of the block subject to prediction is larger than a threshold (pbWThreshold, pbHThreshold);

a prediction mode selection step of when the first flag is true selecting the first intra prediction mode of the block subject to prediction from the first intra prediction mode candidate list based on the first candidate identifying index, when the first flag is false selects the first intra prediction mode of the block subject to prediction based on the intra prediction mode index, when the first selected intra prediction mode is an angular intra prediction mode and when the size of the block subject to prediction is larger than the threshold (pbWThreshold, pbHThreshold) selecting a second intra prediction mode (selected prediction mode 1) of the block subject to prediction from the second intra prediction mode candidate list based on the second flag; and

a prediction value calculation step of calculating a prediction value from a coded pixel neighboring the block subject to prediction, based on the first intra prediction mode of the block subject to prediction or based on an average of prediction values calculated based on the first intra prediction mode of the block subject to prediction and the second intra prediction mode of the block subject to prediction, if the second intra prediction mode of the block subject to prediction is selected,

wherein the prediction mode candidate generation step includes in the second intra prediction mode candidate list intra prediction modes indicated by remainders derived from adding 1 to and subtracting 1 from the first selected intra prediction mode included in the first intra prediction mode candidate list and dividing results of addition and subtraction by the number of intra prediction modes, when the first selected prediction mode is prediction mode 2 or prediction mode 34, the intra prediction mode is uniquely determined to be 0 and the second flag is not coded or decoded.

6.   A picture coding program causing a computer to execute:

a prediction mode candidate generation step of generating a first intra prediction mode candidate list (candidate list 0) and a second intra prediction mode candidate list (candidate list 1), based on an intra prediction mode of a block neighboring a block subject to prediction;

a coding step of when a first intra prediction mode (selected prediction mode 0) of the block subject to prediction is included in the first intra prediction mode candidate list coding the first flag as true and coding a first candidate identifying index, when the intra prediction mode of the block subject to prediction is not included in the first intra prediction mode candidate list codes the first flag as false and codes an intra prediction mode index selected from candidates not included in the first prediction mode candidate list and codes a second flag when the first intra prediction mode of the block subject to prediction is not an non-angular intra prediction mode and when the size of the block subject to prediction is larger than a threshold (pbWThreshold, pbHThreshold);

a prediction mode selection step of when the first flag is true selecting the first intra prediction mode of the block subject to prediction from the first intra prediction mode candidate list based on the first candidate identifying index, when the first flag is false selects first the intra prediction mode of the block subject to prediction based on the intra prediction mode index, when the first selected intra prediction mode is an angular intra prediction mode and when the size of the block subject to prediction is larger than the threshold (pbWThreshold, pbHThreshold) selecting a second intra prediction mode (selected prediction mode 1) of the block subject to prediction from the second intra prediction mode candidate list based on the second flag; and

a prediction value calculation step of calculating a prediction value from a coded pixel neighboring the block subject to prediction, based on the first intra prediction mode of the block subject to prediction or based on an average of prediction values calculated based on the first intra prediction mode of the block subject to prediction and the second intra prediction mode of the block subject to prediction, if the second intra prediction mode of the block subject to prediction is selected,

wherein the prediction mode candidate generation step includes in the second intra prediction mode candidate list intra prediction modes indicated by remainders derived from adding 1 to and subtracting 1 from the first selected intra prediction mode included in the first intra prediction mode candidate list and dividing results of addition and subtraction by the number of intra prediction modes, when the first selected prediction mode is prediction mode 2 or prediction mode 34, the intra prediction mode is uniquely determined to be 0 and the second flag is not coded or decoded.

**Patentansprüche**

1. Eine Bilddecodiervorrichtung (200), aufweisend:

eine Prädiktionsmodus-Kandidatengenerierungseinheit (122), die eine erste Intraprädiktionsmodus-Kandidatenliste (Kandidatenliste 0) und eine zweite Intraprädiktionsmodus-Kandidatenliste (Kandidatenliste 1) basierend auf einem Intraprädiktionsmodus eines Blocks, der einem einer Prädiktion zu unterwerfenden Block benachbart ist, generiert,

eine Decodiereinheit (210), die ein erstes Flag (prev_intra_luma_pred_flag) decodiert, das angibt, ob ein erster Intraprädiktionsmodus (ausgewählter Prädiktionsmodus 0) des einer Prädiktion zu unterwerfenden Blocks in der ersten Intraprädiktionsmodus-Kandidatenliste enthalten ist oder nicht, und, wenn das erste Flag wahr ist, einen ersten Kandidatenidentifikationsindex (mpm_idx) decodiert, und, wenn das erste Flag falsch ist, einen aus nicht in der ersten Prädiktionsmodus-Kandidatenliste enthaltenen Kandidaten ausgewählten Intraprädiktionsmodusindex (rem_intra_luma_pred_mode) decodiert, und ein zweites Flag (2nd_intra_luma_pred_0_flag) decodiert, wenn der erste Intraprädiktionsmodus des einer Prädiktion zu unterwerfenden Blocks kein nichtwinkeliger Intraprädiktionsmodus ist und wenn die Größe des einer Prädiktion zu unterwerfenden Blocks größer als ein Schwellwert (pbWThreshold, pbHThreshold) ist,

eine Prädiktionsmodus-Auswahleinheit (123), die, wenn das erste Flag wahr ist, den ersten Intraprädiktionsmodus des einer Prädiktion zu unterwerfenden Blocks aus der ersten Intraprädiktionsmodus-Kandidatenliste basierend auf dem ersten Kandidatenidentifikationsindex auswählt, wenn das erste Flag falsch ist, den ersten Intraprädiktionsmodus des einer Prädiktion zu unterwerfenden Blocks basierend auf dem Intraprädiktionsmodusindex auswählt, und wenn der erste ausgewählte Intraprädiktionsmodus ein winkeliger Intraprädiktionsmodus ist und wenn die Größe des einer Prädiktion zu unterwerfenden Blocks größer als der Schwellwert (pbWThreshold, pbHThreshold) ist, einen zweiten Intraprädiktionsmodus (ausgewählter Prädiktionsmodus 1) des einer Prädiktion zu unterwerfenden Blocks aus der zweiten Intraprädiktionsmodus-Kandidatenliste basierend auf dem zweiten Flag auswählt, und

eine Prädiktionswert-Berechnungseinheit (124), die einen Prädiktionswert aus einem decodierten Pixel in Nachbarschaft zu dem einer Prädiktion zu unterwerfenden Block basierend auf dem ersten Intraprädiktionsmodus des einer Prädiktion zu unterwerfenden Blocks oder basierend auf einem Durchschnitt der Prädiktionswerte, die basierend auf dem ersten Intraprädiktionsmodus des einer Prädiktion zu unterwerfenden Blocks und dem zweiten Intraprädiktionsmodus des einer Prädiktion zu unterwerfenden Blocks berechnet werden, wenn der zweite Intraprädiktionsmodus des einer Prädiktion zu unterwerfenden Blocks ausgewählt ist, berechnet,

wobei die Prädiktionsmodus-Kandidatengenerierungseinheit (122) in der zweiten Intraprädiktionsmodus-Kandidatenliste Intraprädiktionsmodi enthält, die durch Reste angegeben werden, die erhalten werden durch das Addieren von 1 zu und Subtrahieren von 1 von dem ersten ausgewählten Intraprädiktionsmodus in der ersten Intraprädiktionsmodus-Kandidatenliste und durch das Dividieren der Ergebnisse der Addition und der Subtraktion durch die Anzahl von Intraprädiktionsmodi, wobei, wenn der erste ausgewählte Prädiktionsmodus ein Prädiktionsmodus 2 oder ein Prädiktionsmodus 34 ist, der Intraprädiktionsmodus eindeutig als 0 bestimmt wird und das zweite Flag nicht codiert oder decodiert wird.

2. Ein Bilddecodierverfahren, aufweisend:

einen Prädiktionsmodus-Kandidatengenerierungsschritt zum Generieren einer ersten Intraprädiktionsmodus-Kandidatenliste (Kandidatenliste 0) und einer zweiten Intraprädiktionsmodus-Kandidatenliste (Kandidatenliste 1) basierend auf einem Intraprädiktionsmodus eines Blocks, der einem einer Prädiktion zu unterwerfenden Block benachbart ist,

einen Decodierschritt zum Decodieren eines ersten Flags (prev_intra_luma_pred_flag), das angibt, ob ein erster Intraprädiktionsmodus (ausgewählter Prädiktionsmodus 0) des einer Prädiktion zu unterwerfenden Blocks in der ersten Intraprädiktionsmodus-Kandidatenliste enthalten ist oder nicht, und, wenn das erste Flag wahr ist, Decodieren eines ersten Kandidatenidentifikationsindex (mpm_idx), und, wenn das erste Flag falsch ist, Decodieren eines aus nicht in der ersten Prädiktionsmodus-Kandidatenliste enthaltenen Kandidaten ausgewählten Intraprädiktionsmodusindex (rem_intra_luma_pred_mode), und zum Decodieren eines zweiten Flags (2nd_intra_luma_pred 0 flag), wenn der erste Intraprädiktionsmodus des einer Prädiktion zu unterwerfenden Blocks kein nicht-winkeliger Intraprädiktionsmodus ist und wenn die Größe des einer Prädiktion zu unterwerfenden Blocks größer als ein Schwellwert (pbWThreshold, pbHThreshold) ist,

einen Prädiktionsmodus-Auswahlschritt zum, wenn das erste Flag wahr ist, Auswählen des ersten Intraprädiktionsmodus des einer Prädiktion zu unterwerfenden Blocks aus der ersten Intraprädiktionsmodus-Kandidatenliste basierend auf dem ersten Kandidatenidentifikationsindex, wenn das erste Flag falsch ist, Auswählen des ersten Intraprädiktionsmodus des einer Prädiktion zu unterwerfenden Blocks basierend auf dem Intraprädiktionsmodusindex, und wenn der erste ausgewählte Intraprädiktionsmodus ein winkeliger Intraprädiktionsmodus ist und wenn die Größe des einer Prädiktion zu unterwerfenden Blocks größer als der Schwellwert (pbWThreshold, pbHThreshold) ist, Auswählen eines zweiten Intraprädiktionsmodus (ausgewählter Prädiktionsmodus 1) des einer Prädiktion zu unterwerfenden Blocks aus der zweiten Intraprädiktionsmodus-Kandidatenliste basierend auf dem zweiten Flag, und

einen Prädiktionswert-Berechnungsschritt zum Berechnen eines Prädiktionswerts aus einem decodierten Pixel in Nachbarschaft zu dem einer Prädiktion zu unterwerfenden Block basierend auf dem ersten Intraprädiktionsmodus des einer Prädiktion zu unterwerfenden Blocks oder basierend auf einem Durchschnitt der Prädiktionswerte, die basierend auf dem ersten Intraprädiktionsmodus des einer Prädiktion zu unterwerfenden Blocks und dem zweiten Intraprädiktionsmodus des einer Prädiktion zu unterwerfenden Blocks berechnet werden, wenn der zweite Intraprädiktionsmodus des einer Prädiktion zu unterwerfenden Blocks ausgewählt ist, wobei der Prädiktionsmodus-Kandidatengenerierungsschritt in der zweiten Intraprädiktionsmodus-Kandidatenliste Intraprädiktionsmodi enthält, die durch Reste angegeben werden, die erhalten werden durch das Addieren von 1 zu und Subtrahieren von 1 von dem ersten ausgewählten Intraprädiktionsmodus in der ersten Intraprädiktionsmodus-Kandidatenliste und durch das Dividieren der Ergebnisse der Addition und der Subtraktion durch die Anzahl von Intraprädiktionsmodi, wobei, wenn der erste ausgewählte Prädiktionsmodus ein Prädiktionsmodus 2 oder ein Prädiktionsmodus 34 ist, der Intraprädiktionsmodus eindeutig als 0 bestimmt wird und das zweite Flag nicht codiert oder decodiert wird.

3. Ein Bilddecodierprogramm, das einen Computer veranlasst zum Ausführen von:

einem Prädiktionsmodus-Kandidatengenerierungsschritt zum Generieren einer ersten Intraprädiktionsmodus-Kandidatenliste (Kandidatenliste 0) und einer zweiten Intraprädiktionsmodus-Kandidatenliste (Kandidatenliste 1) basierend auf einem Intraprädiktionsmodus eines Blocks, der einem einer Prädiktion zu unterwerfenden Block benachbart ist,

einem Decodierschritt zum Decodieren eines ersten Flags (prev_intra_luma_pred_flag), das angibt, ob ein erster Intraprädiktionsmodus (ausgewählter Prädiktionsmodus 0) des einer Prädiktion zu unterwerfenden Blocks in der ersten Intraprädiktionsmodus-Kandidatenliste enthalten ist oder nicht, und, wenn das erste Flag wahr ist, Decodieren eines ersten Kandidatenidentifikationsindex (mpm_idx), und, wenn das erste Flag falsch ist, Decodieren eines aus nicht in der ersten Prädiktionsmodus-Kandidatenliste enthaltenen Kandidaten ausgewählten Intraprädiktionsmodusindex (rem_intra_luma_pred_mode), und zum Decodieren eines zweiten Flags (2nd_intra_luma_pred 0 flag), wenn der erste Intraprädiktionsmodus des einer Prädiktion zu unterwerfenden Blocks kein nicht-winkeliger Intraprädiktionsmodus ist und wenn die Größe des einer Prädiktion zu unterwerfenden Blocks größer als ein Schwellwert (pbWThreshold, pbHThreshold) ist,

einem Prädiktionsmodus-Auswahlschritt zum, wenn das erste Flag wahr ist, Auswählen des ersten Intraprädiktionsmodus des einer Prädiktion zu unterwerfenden Blocks aus der ersten Intraprädiktionsmodus-Kandidatenliste basierend auf dem ersten Kandidatenidentifikationsindex, wenn das erste Flag falsch ist, Auswählen des ersten Intraprädiktionsmodus des einer Prädiktion zu unterwerfenden Blocks basierend auf dem Intraprädiktionsmodusindex, und wenn der erste ausgewählte Intraprädiktionsmodus ein winkeliger Intraprädiktionsmodus ist und wenn die Größe des einer Prädiktion zu unterwerfenden Blocks größer als der Schwellwert (pbWThreshold, pbHThreshold) ist, Auswählen eines zweiten Intraprädiktionsmodus (ausgewählter Prädiktionsmodus 1) des einer Prädiktion zu unterwerfenden Blocks aus der zweiten Intraprädiktionsmodus-Kandidatenliste basierend auf dem zweiten Flag, und

einem Prädiktionswert-Berechnungsschritt zum Berechnen eines Prädiktionswerts aus einem decodierten Pixel in Nachbarschaft zu dem einer Prädiktion zu unterwerfenden Block basierend auf dem ersten Intraprädiktionsmodus des einer Prädiktion zu unterwerfenden Blocks oder basierend auf einem Durchschnitt der Prädiktionswerte, die basierend auf dem ersten Intraprädiktionsmodus des einer Prädiktion zu unterwerfenden Blocks und dem zweiten Intraprädiktionsmodus des einer Prädiktion zu unterwerfenden Blocks berechnet werden, wenn der zweite Intraprädiktionsmodus des einer Prädiktion zu unterwerfenden Blocks ausgewählt ist, wobei der Prädiktionsmodus-Kandidatengenerierungsschritt in der zweiten Intraprädiktionsmodus-Kandidatenliste Intraprädiktionsmodi enthält, die durch Reste angegeben werden, die erhalten werden durch das Addieren von 1 zu und Subtrahieren von 1 von dem ersten ausgewählten Intraprädiktionsmodus in der ersten Intraprädiktionsmodus-Kandidatenliste und durch das Dividieren der Ergebnisse der Addition und der Subtraktion durch die Anzahl von Intraprädiktionsmodi, wobei, wenn der erste ausgewählte Prädiktionsmodus ein Prädiktionsmodus 2 oder ein Prädiktionsmodus 34 ist, der Intraprädiktionsmodus eindeutig als 0 bestimmt wird und das zweite Flag nicht codiert oder decodiert wird.

4. Eine Bildcodiervorrichtung, aufweisend:

eine Prädiktionsmodus-Kandidatengenerierungseinheit (122), die eine erste Intraprädiktionsmodus-Kandidatenliste (Kandidatenliste 0) und eine zweite Intraprädiktionsmodus-Kandidatenliste (Kandidatenliste 1) basierend auf einem Intraprädiktionsmodus eines Blocks, der einem einer Prädiktion zu unterwerfenden Block benachbart ist, generiert,
eine Codiereinheit (140), die, wenn ein erster Intraprädiktionsmodus (ausgewählter Prädiktionsmodus 0) des einer Prädiktion zu unterwerfenden Blocks in der ersten Intraprädiktionsmodus-Kandidatenliste enthalten ist, das erste Flag als wahr codiert und einen ersten Kandidatenidentifikationsindex codiert, wenn der Intraprädiktionsmodus des einer Prädiktion zu unterwerfenden Blocks nicht in der ersten Intraprädiktionsmodus-Kandidatenliste enthalten ist, das erste Flag als falsch codiert und einen aus nicht in der ersten Prädiktionsmodus-Kandidatenliste enthaltenen Kandidaten ausgewählten Intraprädiktionsmodusindex codiert, und ein zweites Flag codiert, wenn der erste Intraprädiktionsmodus des einer Prädiktion zu unterwerfenden Blocks kein nichtwinkeliger Intraprädiktionsmodus ist und wenn die Größe des einer Prädiktion zu unterwerfenden Blocks größer als ein Schwellwert (pbWThreshold, pbHThreshold) ist,
eine Prädiktionsmodus-Auswahleinheit (123), die, wenn das erste Flag wahr ist, den ersten Intraprädiktionsmodus des einer Prädiktion zu unterwerfenden Blocks aus der ersten Intraprädiktionsmodus-Kandidatenliste basierend auf dem ersten Kandidatenidentifikationsindex auswählt, wenn das erste Flag falsch ist, den ersten Intraprädiktionsmodus des einer Prädiktion zu unterwerfenden Blocks basierend auf dem Intraprädiktionsmodusindex auswählt, und wenn der erste ausgewählte Intraprädiktionsmodus ein winkeliger Intraprädiktionsmodus ist und wenn die Größe des einer Prädiktion zu unterwerfenden Blocks größer als der Schwellwert (pbWThreshold, pbHThreshold) ist, einen zweiten Intraprädiktionsmodus (ausgewählter Prädiktionsmodus 1) des einer Prädiktion zu unterwerfenden Blocks aus der zweiten Intraprädiktionsmodus-Kandidatenliste basierend auf dem zweiten Flag auswählt, und
eine Prädiktionswert-Berechnungseinheit (124), die einen Prädiktionswert aus einem codierten Pixel in Nachbarschaft zu dem einer Prädiktion zu unterwerfenden Block basierend auf dem ersten Intraprädiktionsmodus des einer Prädiktion zu unterwerfenden Blocks oder basierend auf einem Durchschnitt der Prädiktionswerte, die basierend auf dem ersten Intraprädiktionsmodus des einer Prädiktion zu unterwerfenden Blocks und dem zweiten Intraprädiktionsmodus des einer Prädiktion zu unterwerfenden Blocks berechnet werden, wenn der zweite Intraprädiktionsmodus des einer Prädiktion zu unterwerfenden Blocks ausgewählt ist, berechnet,
wobei die Prädiktionsmodus-Kandidatengenerierungseinheit (122) in der zweiten Intraprädiktionsmodus-Kandidatenliste Intraprädiktionsmodi enthält, die durch Reste angegeben werden, die erhalten werden durch das Addieren von 1 zu und Subtrahieren von 1 von dem ersten ausgewählten Intraprädiktionsmodus in der ersten Intraprädiktionsmodus-Kandidatenliste und durch das Dividieren der Ergebnisse der Addition und der Subtraktion durch die Anzahl von Intraprädiktionsmodi, wobei, wenn der erste ausgewählte Prädiktionsmodus ein Prädiktionsmodus 2 oder ein Prädiktionsmodus 34 ist, der Intraprädiktionsmodus eindeutig als 0 bestimmt wird und das zweite Flag nicht codiert oder decodiert wird.

5. Ein Bildcodierverfahren, aufweisend:

einen Prädiktionsmodus-Kandidatengenerierungsschritt zum Generieren einer ersten Intraprädiktionsmodus-Kandidatenliste (Kandidatenliste 0) und einer zweiten Intraprädiktionsmodus-Kandidatenliste (Kandidatenliste 1) basierend auf einem Intraprädiktionsmodus eines Blocks, der einem einer Prädiktion zu unterwerfenden Block benachbart ist,
einen Codierschritt zum, wenn ein erster Intraprädiktionsmodus (ausgewählter Prädiktionsmodus 0) des einer Prädiktion zu unterwerfenden Blocks in der ersten Intraprädiktionsmodus-Kandidatenliste enthalten ist, Codieren des ersten Flags als wahr und Codieren eines ersten Kandidatenidentifikationsindex, wenn der Intraprädiktionsmodus des einer Prädiktion zu unterwerfenden Blocks nicht in der ersten Intraprädiktionsmodus-Kandidatenliste enthalten ist, Codieren des ersten Flags als falsch und Codieren eines aus nicht in der ersten Prädiktionsmodus-Kandidatenliste enthaltenen Kandidaten ausgewählten Intraprädiktionsmodusindex, und Codieren eines zweiten Flags, wenn der erste Intraprädiktionsmodus des einer Prädiktion zu unterwerfenden Blocks kein nicht-winkeliger Intraprädiktionsmodus ist und wenn die Größe des einer Prädiktion zu unterwerfenden Blocks größer als ein Schwellwert (pbWThreshold, pbHThreshold) ist,
einen Prädiktionsmodus-Auswahlschritt zum, wenn das erste Flag wahr ist, Auswählen des ersten Intraprädiktionsmodus des einer Prädiktion zu unterwerfenden Blocks aus der ersten Intraprädiktionsmodus-Kandidatenliste basierend auf dem ersten Kandidatenidentifikationsindex, wenn das erste Flag falsch ist, Auswählen des ersten Intraprädiktionsmodus des einer Prädiktion zu unterwerfenden Blocks basierend auf dem Intraprädiktionsmodusindex, und wenn der erste ausgewählte Intraprädiktionsmodus ein winkeliger Intraprädiktionsmodus ist und wenn die Größe des einer Prädiktion zu unterwerfenden Blocks größer als der Schwellwert (pbWThreshold, pbHThreshold) ist, Auswählen eines zweiten Intraprädiktionsmodus (ausgewählter Prädiktionsmodus 1) des einer Prädiktion zu unterwerfenden Blocks aus der zweiten Intraprädiktionsmodus-Kandidatenliste basierend auf dem zweiten Flag, und

einen Prädiktionswert-Berechnungsschritt zum Berechnen eines Prädiktionswerts aus einem codierten Pixel in Nachbarschaft zu dem einer Prädiktion zu unterwerfenden Block basierend auf dem ersten Intraprädiktionsmodus des einer Prädiktion zu unterwerfenden Blocks oder basierend auf einem Durchschnitt der Prädiktionswerte, die basierend auf dem ersten Intraprädiktionsmodus des einer Prädiktion zu unterwerfenden Blocks und dem zweiten Intraprädiktionsmodus des einer Prädiktion zu unterwerfenden Blocks berechnet werden, wenn der zweite Intraprädiktionsmodus des einer Prädiktion zu unterwerfenden Blocks ausgewählt ist,

wobei der Prädiktionsmodus-Kandidatengenerierungsschritt in der zweiten Intraprädiktionsmodus-Kandidatenliste Intraprädiktionsmodi enthält, die durch Reste angegeben werden, die erhalten werden durch das Addieren von 1 zu und Subtrahieren von 1 von dem ersten ausgewählten Intraprädiktionsmodus in der ersten Intraprädiktionsmodus-Kandidatenliste und durch das Dividieren der Ergebnisse der Addition und der Subtraktion durch die Anzahl von Intraprädiktionsmodi, wobei, wenn der erste ausgewählte Prädiktionsmodus ein Prädiktionsmodus 2 oder ein Prädiktionsmodus 34 ist, der Intraprädiktionsmodus eindeutig als 0 bestimmt wird und das zweite Flag nicht codiert oder decodiert wird.

6. Ein Bilddecodierprogramm, das einen Computer veranlasst zum Ausführen von:

einem Prädiktionsmodus-Kandidatengenerierungsschritt zum Generieren einer ersten Intraprädiktionsmodus-Kandidatenliste (Kandidatenliste 0) und einer zweiten Intraprädiktionsmodus-Kandidatenliste (Kandidatenliste 1) basierend auf einem Intraprädiktionsmodus eines Blocks, der einem einer Prädiktion zu unterwerfenden Block benachbart ist,

einem Codierschritt zum, wenn ein erster Intraprädiktionsmodus (ausgewählter Prädiktionsmodus 0) des einer Prädiktion zu unterwerfenden Blocks in der ersten Intraprädiktionsmodus-Kandidatenliste enthalten ist, Codieren des ersten Flags als wahr und Codieren eines ersten Kandidatenidentifikationsindex, wenn der Intraprädiktionsmodus des einer Prädiktion zu unterwerfenden Blocks nicht in der ersten Intraprädiktionsmodus-Kandidatenliste enthalten ist, Codieren des ersten Flags als falsch und Codieren eines aus nicht in der ersten Prädiktionsmodus-Kandidatenliste enthaltenen Kandidaten ausgewählten Intraprädiktionsmodusindex, und Codieren eines zweiten Flags, wenn der erste Intraprädiktionsmodus des einer Prädiktion zu unterwerfenden Blocks kein nicht-winkeliger Intraprädiktionsmodus ist und wenn die Größe des einer Prädiktion zu unterwerfenden Blocks größer als ein Schwellwert (pbWThreshold, pbHThreshold) ist,

einem Prädiktionsmodus-Auswahlschritt zum, wenn das erste Flag wahr ist, Auswählen des ersten Intraprädiktionsmodus des einer Prädiktion zu unterwerfenden Blocks aus der ersten Intraprädiktionsmodus-Kandidatenliste basierend auf dem ersten Kandidatenidentifikationsindex, wenn das erste Flag falsch ist, Auswählen des ersten Intraprädiktionsmodus des einer Prädiktion zu unterwerfenden Blocks basierend auf dem Intraprädiktionsmodusindex, und wenn der erste ausgewählte Intraprädiktionsmodus ein winkeliger Intraprädiktionsmodus ist und wenn die Größe des einer Prädiktion zu unterwerfenden Blocks größer als der Schwellwert (pbWThreshold, pbHThreshold) ist, Auswählen eines zweiten Intraprädiktionsmodus (ausgewählter Prädiktionsmodus 1) des einer Prädiktion zu unterwerfenden Blocks aus der zweiten Intraprädiktionsmodus-Kandidatenliste basierend auf dem zweiten Flag, und

einem Prädiktionswert-Berechnungsschritt zum Berechnen eines Prädiktionswerts aus einem codierten Pixel in Nachbarschaft zu dem einer Prädiktion zu unterwerfenden Block basierend auf dem ersten Intraprädiktionsmodus des einer Prädiktion zu unterwerfenden Blocks oder basierend auf einem Durchschnitt der Prädiktionswerte, die basierend auf dem ersten Intraprädiktionsmodus des einer Prädiktion zu unterwerfenden Blocks und dem zweiten Intraprädiktionsmodus des einer Prädiktion zu unterwerfenden Blocks berechnet werden, wenn der zweite Intraprädiktionsmodus des einer Prädiktion zu unterwerfenden Blocks ausgewählt ist,

wobei der Prädiktionsmodus-Kandidatengenerierungsschritt in der zweiten Intraprädiktionsmodus-Kandidatenliste Intraprädiktionsmodi enthält, die durch Reste angegeben werden, die erhalten werden durch das Addieren von 1 zu und Subtrahieren von 1 von dem ersten ausgewählten Intraprädiktionsmodus in der ersten Intraprädiktionsmodus-Kandidatenliste und durch das Dividieren der Ergebnisse der Addition und der Subtraktion durch die Anzahl von Intraprädiktionsmodi, wobei, wenn der erste ausgewählte Prädiktionsmodus ein Prädiktionsmodus 2 oder ein Prädiktionsmodus 34 ist, der Intraprädiktionsmodus eindeutig als 0 bestimmt wird und das zweite Flag nicht codiert oder decodiert wird.

**Revendications**

1. Dispositif de décodage d'images (200) comprenant :

une unité de génération de candidats en mode de prédiction (122) qui génère une première liste de candidats en mode d'intra-prédiction (candidate list 0) et une deuxième liste de candidats en mode d'intra-prédiction (candidate list 1), sur la base d'un mode d'intra-prédiction d'un bloc voisin d'un bloc objet de la prédiction ;
une unité de décodage (210) qui décode un premier indicateur (prev_intra_luma_pred_flag) indiquant si un premier mode d'intra-prédiction (selected prediction mode 0) du bloc objet de la prédiction est inclus ou non dans la première liste de candidats en mode d'intra-prédiction et, lorsque le premier indicateur est vrai, décode un premier indice d'identification de candidat (mpm_idx), lorsque le premier indicateur est faux, décode un indice de mode d'intra-prédiction (rem_intra_luma_pred_mode) sélectionné à partir de candidats non inclus dans la première liste de candidats en mode de prédiction, et décode un deuxième indicateur (2nd_intra_luma_pred_0_flag) lorsque le premier mode d'intra-prédiction du bloc objet de la prédiction n'est pas un mode d'intra-prédiction non angulaire et lorsque la taille du bloc objet de la prédiction est plus grande qu'un seuil (pbWThreshold, pbHThreshold) ;
une unité de sélection de mode de prédiction (123) qui, lorsque le premier indicateur est vrai, sélectionne le premier mode d'intra-prédiction du bloc objet de la prédiction à partir de la première liste de candidats en mode de prédiction sur la base du premier indice d'identification de candidat, lorsque le premier indicateur est faux, sélectionne le premier mode d'intra-prédiction du bloc objet de la prédiction sur la base de l'indice de mode d'intra-prédiction, lorsque le premier mode d'intra-prédiction sélectionné est un mode d'intra-prédiction angulaire et lorsque la taille du bloc objet de la prédiction est plus grande que le seuil (pbWThreshold, pbHThreshold), sélectionne un deuxième mode d'intra-prédiction (selected prediction mode 1) du bloc objet de la prédiction à partir de la deuxième liste de candidats en mode d' intra-prédiction sur la base du deuxième indicateur ; et
une unité de calcul de valeur de prédiction (124) qui calcule une valeur de prédiction à partir d'un pixel décodé voisin du bloc objet de la prédiction, sur la base du premier mode d'intra-prédiction du bloc objet de la prédiction ou sur la base d'une moyenne de valeurs de prédiction calculées sur la base du premier mode d'intra-prédiction du bloc objet de la prédiction et du deuxième mode d'intra-prédiction du bloc objet de la prédiction, si le deuxième mode d'intra-prédiction du bloc objet de la prédiction est sélectionné,
dans lequel l'unité de génération de candidats en mode de prédiction (122) comporte dans la deuxième liste de candidats en mode d'intra-prédiction des modes d'intra-prédiction indiqués par des restes dérivés de l'addition de 1 à et de la soustraction de 1 du premier mode d'intra-prédiction sélectionné inclus dans la première liste de candidats en mode d'intra-prédiction et en divisant les résultats de l'addition et de la soustraction par le nombre de modes d'intra-prédiction, lorsque le premier mode de prédiction sélectionné est le mode de prédiction 2 ou le mode de prédiction 34, le mode d'intra-prédiction est déterminé uniquement comme étant 0 et le deuxième indicateur n'est ni codé, ni décodé.

2. Procédé de décodage d'images comprenant :

une étape de génération de candidats en mode de prédiction qui génère une première liste de candidats en mode d'intra-prédiction (candidate list 0) et une deuxième liste de candidats en mode d'intra-prédiction (candidate list 1) sur la base d'un mode d'intra-prédiction d'un bloc voisin d'un bloc objet de la prédiction ;
une étape de décodage qui décode un premier indicateur (prev_intra_luma_pred_flag) indiquant si un premier mode d'intra-prédiction (selected prediction mode 0) du bloc objet de la prédiction est inclus ou non dans la première liste de candidats en mode d'intra-prédiction et, lorsque le premier indicateur est vrai, décode un premier indice d'identification de candidat (mpm_idx), lorsque le premier indicateur est faux, décode un indice de mode d'intra-prédiction (rem_intra_luma_pred_mode) sélectionné à partir de candidats non inclus dans la première liste de candidats en mode de prédiction, et décode un deuxième indicateur (2nd_intra_luma_pred_0_flag) lorsque le premier mode d'intra-prédiction du bloc objet de la prédiction n'est pas un mode d'intra-prédiction non angulaire et lorsque la taille du bloc objet de la prédiction est plus grande qu'un seuil (pbWThreshold, pbHThreshold) ;
une étape de sélection de mode de prédiction qui, lorsque le premier indicateur est vrai, sélectionne le premier mode d'intra-prédiction du bloc objet de la prédiction à partir de la première liste de candidats en mode d'intra-prédiction sur la base du premier indice d'identification de candidat, lorsque le premier indicateur est faux, sélectionne le premier mode d'intra-prédiction du bloc objet de la prédiction sur la base de l'indice de mode d'intra-prédiction, lorsque le premier mode d'intra-prédiction sélectionné est un mode d'intra-prédiction angulaire et lorsque la taille du bloc objet de la prédiction est plus grande que le seuil (pbWThreshold, pbHThreshold), sélectionne un deuxième mode d'intra-prédiction (selected prediction mode 1) du bloc objet de la prédiction à partir de la deuxième liste de candidats en mode d' intra-prédiction sur la base du deuxième indicateur ; et une étape de calcul de valeur de prédiction qui calcule une valeur de prédiction à partir d'un pixel décodé voisin du bloc objet de la prédiction, sur la base du premier mode d'intra-prédiction du bloc objet de la prédiction ou sur la base d'une moyenne de valeurs de prédiction calculées sur la base du premier mode d'intra-prédiction du bloc objet de la prédiction et du deuxième mode d'intra-prédiction du bloc objet de la prédiction, si le deuxième mode d' intra-prédiction du bloc objet de la prédiction est sélectionné,

dans lequel l'étape de génération de candidats en mode de prédiction comporte dans la deuxième liste de candidats en mode d'intra-prédiction des modes d'intra-prédiction indiqués par des restes dérivés de l'addition de 1 à et de la soustraction de 1 du premier mode d'intra-prédiction sélectionné inclus dans la première liste de candidats en mode d'intra-prédiction et en divisant les résultats de l'addition et de la soustraction par le nombre de modes d'intra-prédiction, lorsque le premier mode de prédiction sélectionné est le mode de prédiction 2 ou le mode de prédiction 34, le mode d'intra-prédiction est déterminé uniquement comme étant 0 et le deuxième indicateur n'est ni codé, ni décodé.

3. Programme de décodage d'images amenant un ordinateur à exécuter :

une étape de génération de candidats en mode de prédiction qui génère une première liste de candidats en mode d'intra-prédiction (candidate list 0) et une deuxième liste de candidats en mode d'intra-prédiction (candidate list 1) sur la base d'un mode d'intra-prédiction d'un bloc voisin d'un bloc objet de la prédiction ;

une étape de décodage qui décode un premier indicateur (prev_intra_luma_pred_flag) indiquant si un premier mode d'intra-prédiction (selected prediction mode 0) du bloc objet de la prédiction est inclus ou non dans la première liste de candidats en mode d'intra-prédiction et, lorsque le premier indicateur est vrai, décode un premier indice d'identification de candidat (mpm_idx), lorsque le premier indicateur est faux, décode un indice de mode d'intra-prédiction (rem_intra_luma_pred_mode) sélectionné à partir de candidats non inclus dans la première liste de candidats en mode de prédiction, et décode un deuxième indicateur (2nd_intra_luma_pred_0_flag) lorsque le premier mode d'intra-prédiction du bloc objet de la prédiction n'est pas un mode d'intra-prédiction non angulaire et lorsque la taille du bloc objet de la prédiction est plus grande qu'un seuil (pbWThreshold, pbHThreshold) ;

une étape de sélection de mode de prédiction qui, lorsque le premier indicateur est vrai, sélectionne le premier mode d'intra-prédiction du bloc objet de la prédiction à partir de la première liste de candidats en mode d'intra-prédiction sur la base du premier indice d'identification de candidat, lorsque le premier indicateur est faux, sélectionne le premier mode d'intra-prédiction du bloc objet de la prédiction sur la base de l'indice de mode d'intra-prédiction, lorsque le premier mode d'intra-prédiction sélectionné est un mode d'intra-prédiction angulaire et lorsque la taille du bloc objet de la prédiction est plus grande que le seuil (pbWThreshold, pbHThreshold), sélectionne un deuxième mode d'intra-prédiction (selected prediction mode 1) du bloc objet de la prédiction à partir de la deuxième liste de candidats en mode d' intra-prédiction sur la base du deuxième indicateur ; et

une étape de calcul de valeur de prédiction qui calcule une valeur de prédiction à partir d'un pixel décodé voisin du bloc objet de la prédiction, sur la base du premier mode d'intra-prédiction du bloc objet de la prédiction ou sur la base d'une moyenne de valeurs de prédiction calculées sur la base du premier mode d'intra-prédiction du bloc objet de la prédiction et du deuxième mode d'intra-prédiction du bloc objet de la prédiction, si le deuxième mode d' intra-prédiction du bloc objet de la prédiction est sélectionné,

dans lequel l'étape de génération de candidats en mode de prédiction comporte dans la deuxième liste de candidats en mode d'intra-prédiction des modes d'intra-prédiction indiqués par des restes dérivés de l'addition de 1 à et de la soustraction de 1 du premier mode d'intra-prédiction sélectionné inclus dans la première liste de candidats en mode d'intra-prédiction et en divisant les résultats de l'addition et de la soustraction par le nombre de modes d'intra-prédiction, lorsque le premier mode de prédiction sélectionné est le mode de prédiction 2 ou le mode de prédiction 34, le mode d'intra-prédiction est déterminé uniquement comme étant 0 et le deuxième indicateur n'est ni codé, ni décodé.

4. Dispositif de codage d'images comprenant :

une unité de génération de candidats en mode de prédiction (122) qui génère une première liste de candidats en mode d'intra-prédiction (candidate list 0) et une deuxième liste de candidats en mode d'intra-prédiction (candidate list 1), sur la base d'un mode d'intra-prédiction d'un bloc voisin d'un bloc objet de la prédiction ;

une unité de codage (140) qui, lorsqu'un premier mode d'intra-prédiction (selected prediction mode 0) du bloc objet de la prédiction est inclus dans la première liste de candidats en mode d'intra-prédiction, code le premier indicateur comme étant vrai et code un premier indice d'identification de candidat lorsque le mode d'intra-prédiction du bloc objet de la prédiction n'est pas inclus dans la première liste de candidats en mode d'intra-prédiction, code le premier indicateur comme étant faux et code un indice de mode d'intra-prédiction sélectionné à partir de candidats non inclus dans la première liste de candidats en mode de prédiction et code un deuxième indicateur lorsque le premier mode d'intra-prédiction du bloc objet de la prédiction n'est pas un mode d'intra-prédiction non angulaire et lorsque la taille du bloc objet de la prédiction est plus grande qu'un seuil (pbWThreshold, pbHThreshold) ;

une unité de sélection de mode de prédiction (123) qui, lorsque le premier indicateur est vrai, sélectionne le premier mode d'intra-prédiction du bloc objet de la prédiction à partir de la première liste de candidats en mode de prédiction sur la base du premier indice d'identification de candidat, lorsque le premier indicateur est faux, sélectionne le premier mode d'intra-prédiction du bloc objet de la prédiction sur la base de l'indice de mode d'intra-prédiction, lorsque le premier mode d'intra-prédiction sélectionné est un mode d'intra-prédiction angulaire et lorsque la taille du bloc objet de la prédiction est plus grande que le seuil (pbWThreshold, pbHThreshold), sélectionne un deuxième mode d'intra-prédiction (selected prediction mode 1) du bloc objet de la prédiction à partir de la deuxième liste de candidats en mode d' intra-prédiction sur la base du deuxième indicateur ; et

une unité de calcul de valeur de prédiction (124) qui calcule une valeur de prédiction à partir d'un pixel codé voisin du bloc objet de la prédiction, sur la base du premier mode d'intra-prédiction du bloc objet de la prédiction ou sur la base d'une moyenne de valeurs de prédiction calculées sur la base du premier mode d'intra-prédiction du bloc objet de la prédiction et du deuxième mode d'intra-prédiction du bloc objet de la prédiction, si le deuxième mode d'intra-prédiction du bloc objet de la prédiction est sélectionné,

dans lequel l'unité de génération de candidats en mode de prédiction (122) comporte dans la deuxième liste de candidats en mode d'intra-prédiction des modes d'intra-prédiction indiqués par des restes dérivés de l'addition de 1 à et de la soustraction de 1 du premier mode d'intra-prédiction sélectionné inclus dans la première liste de candidats en mode d'intra-prédiction et en divisant les résultats de l'addition et de la soustraction par le nombre de modes d'intra-prédiction, lorsque le premier mode de prédiction sélectionné est le mode de prédiction 2 ou le mode de prédiction 34, le mode d'intra-prédiction est déterminé uniquement comme étant 0 et le deuxième indicateur n'est ni codé, ni décodé.

5. Procédé de codage d'images comprenant :

une étape de génération de candidats en mode de prédiction qui génère une première liste de candidats en mode d'intra-prédiction (candidate list 0) et une deuxième liste de candidats en mode d'intra-prédiction (candidate list 1), sur la base d'un mode d'intra-prédiction d'un bloc voisin d'un bloc objet de la prédiction ;

une étape de codage qui, lorsqu'un premier mode d'intra-prédiction (selected prediction mode 0) du bloc objet de la prédiction est inclus dans la première liste de candidats en mode d'intra-prédiction, code le premier indicateur comme étant vrai et code un premier indice d'identification de candidat, lorsque le mode d' intra-prédiction du bloc objet de la prédiction n'est pas inclus dans la première liste de candidats en mode d'intra-prédiction, code le premier indicateur comme étant faux et code un indice de mode d'intra-prédiction sélectionné à partir de candidats non inclus dans la première liste de candidats en mode de prédiction et code un deuxième indicateur lorsque le premier mode d'intra-prédiction du bloc objet de la prédiction n'est pas un mode d'intra-prédiction non angulaire et lorsque la taille du bloc objet de la prédiction est plus grande qu'un seuil (pbWThreshold, pbHThreshold) ;

une étape de sélection de mode de prédiction qui, lorsque le premier indicateur est vrai, sélectionne le premier mode d'intra-prédiction du bloc objet de la prédiction à partir de la première liste de candidats en mode de prédiction sur la base du premier indice d'identification de candidat, lorsque le premier indicateur est faux, sélectionne le premier mode d'intra-prédiction du bloc objet de la prédiction sur la base de l'indice de mode d'intra-prédiction, lorsque le premier mode d'intra-prédiction sélectionné est un mode d'intra-prédiction angulaire et lorsque la taille du bloc objet de la prédiction est plus grande que le seuil (pbWThreshold, pbHThreshold), sélectionne un deuxième mode d'intra-prédiction (selected prediction mode 1) du bloc objet de la prédiction à partir de la deuxième liste de candidats en mode d' intra-prédiction sur la base du deuxième indicateur ; et

une étape de calcul de valeur de prédiction qui calcule une valeur de prédiction à partir d'un pixel codé voisin du bloc objet de la prédiction, sur la base du premier mode d'intra-prédiction du bloc objet de la prédiction ou sur la base d'une moyenne de valeurs de prédiction calculées sur la base du premier mode d'intra-prédiction du bloc objet de la prédiction et du deuxième mode d'intra-prédiction du bloc objet de la prédiction, si le deuxième mode d' intra-prédiction du bloc objet de la prédiction est sélectionné,

dans lequel l'étape de génération de candidats en mode de prédiction comporte dans la deuxième liste de candidats en mode d'intra-prédiction des modes d'intra-prédiction indiquées par des restes dérivés de l'addition de 1 à et de la soustraction de 1 du premier mode d'intra-prédiction sélectionné inclus dans la première liste de candidats en mode d'intra-prédiction et en divisant les résultats de l'addition et de la soustraction par le nombre de modes d'intra-prédiction, lorsque le premier mode de prédiction sélectionné est le mode de prédiction 2 ou le mode de prédiction 34, le mode d'intra-prédiction est déterminé uniquement comme étant 0 et le deuxième indicateur n'est ni codé, ni décodé.

6. Programme de codage d'images amenant un ordinateur à exécuter :

une étape de génération de candidats en mode de prédiction qui génère une première liste de candidats en mode d'intra-prédiction (candidate list 0) et une deuxième liste de candidats en mode d'intra-prédiction (candidate list 1), sur la base d'un mode d'intra-prédiction d'un bloc voisin d'un bloc objet de la prédiction ;

une étape de codage qui, lorsqu'un premier mode d'intra-prédiction (selected prediction mode 0) du bloc objet de la prédiction est inclus dans la première liste de candidats en mode d'intra-prédiction, code le premier indicateur comme étant vrai et code un premier indice d'identification de candidat, lorsque le mode d' intra-prédiction du bloc objet de la prédiction n'est pas inclus dans la première liste de candidats en mode d'intra-prédiction, code le premier indicateur comme étant faux et code un indice de mode d'intra-prédiction sélectionné à partir de candidats non inclus dans la première liste de candidats en mode de prédiction et code un deuxième indicateur lorsque le premier mode d'intra-prédiction du bloc objet de la prédiction n'est pas un mode d'intra-prédiction non angulaire et lorsque la taille du bloc objet de la prédiction est plus grande qu'un seuil (pbWThreshold, pbHThreshold) ;

une étape de sélection de mode de prédiction qui, lorsque le premier indicateur est vrai, sélectionne le premier mode d'intra-prédiction du bloc objet de la prédiction à partir de la première liste de candidats en mode de prédiction sur la base du premier indice d'identification de candidat, lorsque le premier indicateur est faux, sélectionne le premier mode d'intra-prédiction du bloc objet de la prédiction sur la base de l'indice de mode d'intra-prédiction, lorsque le premier mode d'intra-prédiction sélectionné est un mode d'intra-prédiction angulaire et lorsque la taille du bloc objet de la prédiction est plus grande que le seuil (pbWThreshold, pbHThreshold), sélectionne un deuxième mode d'intra-prédiction (selected prediction mode 1) du bloc objet de la prédiction à partir de la deuxième liste de candidats en mode d' intra-prédiction sur la base du deuxième indicateur ; et

une étape de calcul de valeur de prédiction qui calcule une valeur de prédiction à partir d'un pixel codé voisin du bloc objet de la prédiction, sur la base du premier mode d'intra-prédiction du bloc objet de la prédiction ou sur la base d'une moyenne de valeurs de prédiction calculées sur la base du premier mode d'intra-prédiction du bloc objet de la prédiction et du deuxième mode d'intra-prédiction du bloc objet de la prédiction, si le deuxième mode d' intra-prédiction du bloc objet de la prédiction est sélectionné,

dans lequel l'étape de génération de candidats en mode de prédiction comporte dans la deuxième liste de candidats en mode d'intra-prédiction des modes d'intra-prédiction indiqués par des restes dérivés de l'addition de 1 à et de la soustraction de 1 du premier mode d'intra-prédiction sélectionné inclus dans la première liste de candidats en mode d'intra-prédiction et en divisant les résultats de l'addition et de la soustraction par le nombre de modes d'intra-prédiction, lorsque le premier mode de prédiction sélectionné est le mode de prédiction 2 ou le mode de prédiction 34, le mode d'intra-prédiction est déterminé uniquement comme étant 0 et le deuxième indicateur n'est ni codé, ni décodé.

FIG.1

FIG.2

```
cording_unit(x0, y0) {
 ...
  pbOffset = ( PartMode = = PART_NxN ) ? ( nCbS / 2 ) : nCbS
  for( j = 0; j < nCbS; j = j + pbOffset )
    for( i = 0; i < nCbS; i = i + pbOffset )
      prev_intra_luma_pred_flag[ x0 + i ][ y0 + j ]
  for( j = 0; j < nCbS; j = j + pbOffset )
    for( i = 0; i < nCbS; i = i + pbOffset )
      if( prev_intra_luma_pred_flag[ x0 + i ][ y0 + j ] )
        mpm_idx_[ x0 + i ][ y0 + j ]
      else
        rem_intra_luma_pred_mode[ x0 + i ][ y0 + j ]
}
```

# FIG.3

EP 3 860 122 B1

FIG.4

FIG.5

| MODE COUNT DETERMINA-TION UNIT (121) | PREDICTION MODE CANDIDATE GENERATION UNIT (122) | PREDICTION MODE SELECTION UNIT (123) | PREDICTION VALUE CALCULATION UNIT (124) | PREDICTION VALUE WEIGHTING UNIT (125) |

120

FIG.6

```
                    ┌─────────────┐
                    │    START    │
                    └──────┬──────┘
                           │
                           ▼                                          S100
        ╱────────────────────────────────────────────────╲
       ╱   PREDICTION BLOCK WIDTH EQUAL TO                  ╲    NO
      ╱  OR LARGER THAN PREDETERMINED THRESHOLD WIDTH AND    ╲─────────┐
      ╲    PREDICTION BLOCK HEIGHT EQUAL TO LARGER          ╱          │
       ╲     THAN PREDETERMINED THRESHOLD HEIGHT?          ╱           │
        ╲────────────────────────────────────────────────╱            │
                           │ YES      S101                             │ S102
                           ▼                                           ▼
        ┌──────────────────────────────────┐      ┌──────────────────────────────────┐
        │   SET PREDICTION MODE COUNT TO 2  │      │   SET PREDICTION MODE COUNT TO 1  │
        └──────────────────┬───────────────┘      └──────────────────┬───────────────┘
                           │◄─────────────────────────────────────────┘
                           ▼        S103
                    ╱──────────────╲
                    │    M=0/1      │
                    ╲──────────────╱
                           │        S104
                           ▼
        ┌──────────────────────────────────┐
        │     GENERATE CANDIDATE LIST M     │
        └──────────────────┬───────────────┘
                           │        S105
                           ▼
        ┌──────────────────────────────────┐
        │  SELECT SELECTED PREDICTION MODE M│
        └──────────────────┬───────────────┘
                           │        S106
                           ▼
        ┌──────────────────────────────────┐
        │    CALCULATE PREDICTION VALUE M   │
        └──────────────────┬───────────────┘
                           │                                          S110
                           ▼
        ╱────────────────────────────────────────────────╲    NO
       ╱           IS SELECTED                             ╲─────────┐
      ╱  PREDICTION MODE M NOT NON-ANGULAR INTRA            ╲         │
      ╲         PREDICTION MODE?                            ╱         │
        ╲────────────────────────────────────────────────╱          │
                           │ YES      S107                           │
                           ▼                                         │
                    ╱──────────────╲                                 │
                    │      M        │                                │
                    ╲──────────────╱                                 │
                           │◄────────────────────────────────────────┘
                           ▼        S108
        ┌──────────────────────────────────┐
        │     WEIGHT PREDICTION VALUE       │
        └──────────────────┬───────────────┘
                           ▼
                    ┌─────────────┐
                    │     END     │
                    └─────────────┘
```

FIG.7

FIG.8

# FIG.9

START

S200
X=A/B/C/D/E

S210
DOES BLOCK X USE INTRA PREDICTION MODE? — NO

YES

S201
IS THE SAME PREDICTION MODE 0 AS THAT OF BLOCK X ABSENT IN CANDIDATE LIST 0? — NO

YES

S202
ADD PREDICTION MODE 0 OF BLOCK X TO CANDIDATE LIST 0

S203
HAS THE NUMBER OF PREDICTION MODES ADDED TO CANDIDATE LIST 0 REACHED PREDETERMINED NUMBER? — YES

NO

S204
X

S205
IS THE NUMBER OF PREDICTION MODES ADDED TO CANDIDATE LIST 0 SMALLER THAN PREDETERMINED NUMBER OF CANDIDATES? — NO

YES

S206
ADD PREDICTION MODE CANDIDATES TO CANDIDATE LIST 0 BASED ON PREDETERMINED PRIORITY ORDER

END

FIG.10

| PRIORITY ORDER | PREDICTION MODE |
|---|---|
| 1 | PREDICTION MODE 0 |
| 2 | PREDICTION MODE 1 |
| 3 | PREDICTION MODE 26 |

FIG.11

START

S300
X=A/B/C/D/E

S310
DOES BLOCK X USE ANGULAR
INTRA PREDICTION MODE? → NO

YES

S301
N=1/0

S302
IS THE SAME
PREDICTION MODE N AS THAT
OF BLOCK X ABSENT IN CANDIDATE
LIST 1? → NO

YES

S303
ADD PREDICTION MODE N
OF BLOCK X TO CANDIDATE LIST 1

S304
HAS THE NUMBER OF
PREDICTION MODES ADDED TO
CANDIDATE LIST 1 REACHED PREDETERMINED
NUMBER?

YES

NO

S305
N

S306
X

S307
IS THE NUMBER OF
PREDICTION MODES ADDED TO CANDIDATE
LIST 1 SMALLER THAN PREDETERMINED
NUMBER OF CANDIDATES? → NO

YES

S308
ADD PREDICTION MODE CANDIDATES TO CANDIDATE
LIST 1 BASED ON PREDETERMINED PRIORITY ORDER

END

FIG.12

| PRIORITY ORDER | PREDICTION MODE |
|---|---|
| 1 | PREDICTION MODE 26 |
| 2 | PREDICTION MODE 10 |
| 3 | PREDICTION MODE 18 |
| 4 | PREDICTION MODE 34 |

FIG.13

```
prediction_unit(pbWidth, pbHeight) {
  ...
  prev_intra_luma_pred_flag
  if( prev_intra_luma_pred_flag)
    mpm_idx
  else
    rem_intra_luma_pred_mode
  if( pbWidth>= pbWThreshold && pbHeight >= pbHThreshold ) {
    if( intra_luma_pred_mode != INTRA_PLANAR &&  intra_luma_pred_mode != INTRA_DC ) {
      2nd_prev_intra_luma_pred_flag
      if( 2nd_prev_intra_luma_pred_flag)
        2nd_mpm_idx
      else
        2nd_rem_intra_luma_pred_mode
    }
  }
}
```

EP 3 860 122 B1

# FIG.14

```
prediction_unit(pbWidth, pbHeight) {
  ...
  prev_intra_luma_pred_flag
  if( prev_intra_luma_pred_flag)
    mpm_idx
  else
    rem_intra_luma_pred_mode
  if( pbWidth>= pbWThreshold && pbHeight >= pbHThreshold )
    if( intra_luma_pred_mode != INTRA_PLANAR &&  intra_luma_pred_mode != INTRA_DC )
      2nd_intra_luma_pred_0_flag
  }
}
```

FIG.15

## FIG.16

```
        ( START )
            │
            ▼
    ┌─────────────────┐  S501
    │     K=0/1        │
    └─────────────────┘
            │
            ▼                        S502
    ┌─────────────────────────────────┐
    │ CALCULATE EVALUATION SCORES OF   │
    │ NON-ANGULAR INTRA PREDICTION     │
    │ MODES K                          │
    └─────────────────────────────────┘
            │
            ▼
    ┌─────────────────┐  S503
    │        K         │
    └─────────────────┘
            │
            ▼
    ┌─────────────────┐  S505
    │      M=0/1       │
    └─────────────────┘
            │
            ▼                        S506
    ┌─────────────────────────────────┐
    │ GENERATE PREDICTION              │
    │ MODE CANDIDATE LIST M            │
    └─────────────────────────────────┘
            │
            ▼                        S507
    ┌─────────────────────────────────┐
    │ SELECT SELECTED PREDICTION MODE M│
    └─────────────────────────────────┘
            │
            ▼
    ┌─────────────────┐  S508
    │        M         │
    └─────────────────┘
            │
            ▼                        S510
    ┌─────────────────────────────────┐
    │ CALCULATE EVALUATION SCORE IN THE│
    │ CASE OF THE PREDICTION MODE      │
    │ COUNT OF 2                       │
    └─────────────────────────────────┘
            │
            ▼                        S511
    ┌─────────────────────────────────┐
    │ SELECT INTRA PREDICTION MODE     │
    └─────────────────────────────────┘
            │
            ▼                        S512
    ┌─────────────────────────────────┐
    │ CALCULATE PREDICTION VALUE       │
    └─────────────────────────────────┘
            │
            ▼
        (  END  )
```

# FIG.17

```
prediction_unit(pbWidth, pbHeight) {
  ...
  intra_luma_merge_flag
  if ( intra_luma_merge_flag )
    intra_luma_merge_idx
  else {
    intra_luma_non_angular_pred_flag
    if( intra_luma_non_angular_pred_flag )
      non_angular_idx
    else {
      intra_luma_pred_idc
      if ( intra_luma_pred_idc != PRED_V ) {
        prev_intra_luma_pred_h_flag
        if( prev_intra_luma_pred_h_flag)
          mpm_idx_h
        else
          rem_intra_luma_pred_mode_h
      }
      if ( intra_luma_pred_idc != PRED_H ) {
        prev_intra_luma_pred_v_flag
        if( prev_intra_luma_pred_v_flag)
          mpm_idx_v
        else
          rem_intra_luma_pred_mode_v
      }
    }
  }
}
```

FIG.18

| intra_luma_merge_idx | ADJACENT BLOCK |
|:---:|:---:|
| 0 | A |
| 1 | B |
| 2 | C |
| 3 | D |
| 4 | E |

# FIG.19

```
prediction_unit(pbWidth, pbHeight) {
  ...
  intra_luma_merge_flag
  if ( intra_luma_merge_flag )
    intra_luma_merge_idx
  else {
    prev_intra_luma_pred_flag
    If( prev_intra_luma_pred_flag ) {
      intra_luma_non_angular_pred_flag
      if( intra_luma_non_angular_pred_flag )
        non_angular_idx
      else
        mpm_idx
    }
    else
      rem_intra_luma_pred_mode
  }
}
```

# FIG.20

```
prediction_unit(pbWidth, pbHeight) {
  ...
  intra_luma_merge_flag
  if ( intra_luma_merge_flag )
    intra_luma_merge_idx
  else {
    intra luma non angular pred flag
    if( intra luma non angular pred flag )
      non angular idx
    else {
      prev_intra_luma_pred_flag
      if( prev_intra_luma_pred_flag )
        mpm_idx
      else
        rem_intra_luma_pred_mode
    }
  }
}
```

**EP 3 860 122 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018098064 A1
- WO 2018066863 A1
- JP 2016213853 A

**Non-patent literature cited in the description**

- **VAN DER AUWERA (QUALCOMM) G et al.** Description of Core Experiment 3 (CE3): Intra Prediction and Mode Coding. *MPEG MEETING; 20180416 - 20180420; SAN DIEGO; (MOTION PICTURE EXPERT GROUP OR ISO/IEC JTC1/SC29/WG11),* 16 April 2018, (m42829